(19) **Europäisches Patentamt**
**European Patent Office**
**Office européen des brevets**

(11) **EP 4 783 738 A1**

(12) **EUROPEAN PATENT APPLICATION**
published in accordance with Art. 153(4) EPC

(43) Date of publication:
29.07.2026 Bulletin 2026/31

(21) Application number: 24868734.5

(22) Date of filing: 20.09.2024

(51) International Patent Classification (IPC):
H05B 6/12 (2006.01)        H05B 6/06 (2006.01)
F24C 15/34 (2006.01)       F24C 15/10 (2006.01)
F24C 3/12 (2006.01)        H02M 1/10 (2006.01)

(52) Cooperative Patent Classification (CPC):
H05B 6/062; B32B 7/12; F24C 3/12; F24C 7/06;
F24C 7/08; F24C 15/00; F24C 15/10; F24C 15/34;
G01K 1/14; H05K 9/00; G01K 2207/06;
H05B 2213/03; H05B 2213/05; Y02B 40/00

(86) International application number:
PCT/KR2024/014230

(87) International publication number:
WO 2025/063758 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023  KR 20230126657
21.09.2023  KR 20230126658
26.09.2023  KR 20230129155
22.02.2024  KR 20240026117

(71) Applicant: LG Electronics Inc.
Yeongdeungpo-gu
Seoul 07336 (KR)

(72) Inventors:
• HAN, Jinwook
Seoul 08592 (KR)
• KANG, Kyelyong
Seoul 08592 (KR)
• CHO, Bong Jin
Seoul 08592 (KR)
• KIM, Seongju
Seoul 08592 (KR)
• PARK, Hongsun
Seoul 08592 (KR)
• AHN, Hoseop
Seoul 08592 (KR)
• HAN, Hyeong Gu
Seoul 08592 (KR)
• JEONG, Sihoon
Seoul 08592 (KR)

(74) Representative: Ter Meer Steinmeister & Partner
Patentanwälte mbB
Nymphenburger Straße 4
80335 München (DE)

(54) **HOME APPLIANCE**

(57)    The present disclosure relates to a working coil and a home appliance including the working coil. A home appliance according to an embodiment may include a first working coil connected with an inverter and disposed at a position corresponding to a first heating area; a second working coil connected in series with the first working coil and disposed at a position corresponding to a second heating area; a third working coil connected in series with the first working coil, connected in parallel with the second working coil, and disposed at a position corresponding to a third heating area; a first relay connected between the second working coil and a ground terminal; a second relay connected between the third working coil and a ground terminal; and a controller configured to perform container detection on the first heating area, the second heating area, and the third heating area, and control opening and closing states of the first relay and the second relay according to a result of the container detection.

**(Cont. next page)**

[FIG. 5]

## Description

## Technical Field

The present disclosure relates to a home appliance, and more particularly, to a working coil and a home appliance including the working coil.

## Background Art

Recently, various home appliances are being used to make human life more convenient. Examples of home appliances include cooking appliances, refrigerators, washing machines, clothes dryers, clothes management machines, water purifiers, and the like.

The cooking appliance, one of the home appliances, is a type of home appliance for cooking food, which is installed in the kitchen space and cooks food according to the user's intention. The cooking appliance may be classified into various categories based on the type or kind of heat source or fuel used.

When classifying the cooking appliance based on a method of cooking the food, the cooking appliance may be classified into an open cooking appliance and a closed cooking appliance depending on a type of a space where the food is placed. Examples of the closed cooking appliance include an oven, a microwave, and the like, while examples of the open cooking appliance include a cooktop, a hob, and the like.

Among the open cooking appliances, the cooktop is provided to be capable of heating food contained in a cooking container through at least one burner. The cooktop may be provided in a form having a burner using electricity, or may be provided in a form having a burner using gas. Additionally, the cooktop may be implemented as a standalone unit, as well as in the form of an oven range including an oven underneath the cooktop.

As an example of a cooktop having a burner using electricity, there is an induction heating device. The induction heating device is a cooking appliance that performs a cooking function in an induction heating method. In the induction heating device, when a current is applied to a working coil, eddy current is generated in the cooking container made of a magnetic material, and food may be cooked by the cooking container that generates heat by acting as a resistance to the eddy current.

The induction heating device does not require combustion of gas and therefore does not produce combustion exhaust gases. Furthermore, by allowing the container itself to generate heat immediately, the induction heating device can minimize the transfer process through heat radiation or conduction, thus being capable of heating the cooked food at a high speed.

Typically, in the induction heating device, the position where the cooking container is to be placed is marked on the top plate above the working coil, and the cooking container is heated by the working coil in a state in which the cooking container is placed in the marked area.

In the induction heating device, one or more working coils and circuit boards may be provided. The working coil serves to transmit electromagnetic force to the cooking container. In general, the working coil may be formed in the form of a wire wound in a spiral shape. And the circuit board may play a role in controlling the supply of the induction current to the working coil in a circuit manner.

Recently, instead of a working coil in the form of a wire wound in a spiral shape, a working coil in the form of a coil pattern formed on a circuit board is also used.

Among the costs and time required to manufacture the induction heating device, the cost and time spent on manufacturing the working coil account for a large proportion. Among these, the cost of the wire and the cost and time required to wind the wire are significant.

If the working coil is formed in the form of forming a coil-shaped pattern on a circuit board instead of forming a working coil by winding a wire, the cost and time spent on manufacturing the working coil can be reduced.

To the working coil, high frequency power is applied, and thereby, considerable heat is generated in the working coil. In particular, in the induction heating device that requires high power, a lot of heat is generated in the working coil as the high power is applied.

In a case where a working coil is formed in the form of forming a coil-shaped pattern on a circuit board, due to the limited area of the circuit board, the working coil is inevitably formed in a form in which coil patterns are concentrated in a narrow area of the circuit board. As a result, the circuit board on which the working coil is formed may be inevitably subjected to a lot of heat relative to its area, and thereby, the temperature of the circuit board may increase excessively.

Meanwhile, recently, an induction heating device has been developed that automatically recognizes the size and location of a cooking container and performs heating in an appropriate manner even if the seating position of the cooking container is not placed in a specific location. In order for the heating in the induction heating device to be performed more effectively, the number of working coils provided in the induction heating device needs to be increased.

Therefore, due to the temperature rise problem caused by the concentration of coil patterns, there is a difficulty for the working coil in the form of a coil pattern to be applied to the above-described type of induction heating device.

## Disclosure of the invention

## Technical Problem

The purpose of the present disclosure is to provide a working coil and a home appliance including the working coil, whose structure is improved to suppress the temperature rise.

Also, the purpose of the present disclosure is to provide a working coil and a home appliance including the working coil, whose structure is improved to increase the density of the area occupied by the working coil within a cooktop.

Also, the purpose of the present disclosure is to provide a working coil and a home appliance including the working coil, whose structure is improved to allow the working coils to be disposed more densely while suppressing the temperature rise of the working coils.

Also, the purpose of the present disclosure is to provide a working coil and a home appliance including the working coil, whose structure is improved to reduce the loss of the original substrate used to manufacture the coil substrate portion while increasing the density of the area occupied by the working coil within a cooktop.

Also, the purpose of the present disclosure is to provide a working coil and a home appliance including the working coil, whose structure is improved to simplify the connection structure between the working coil and the electrical components.

Also, the purpose of the present disclosure is to provide a working coil and a home appliance including the working coil, whose structure is improved to suppress the decrease in the pattern cross-sectional area per turn of the working coil caused by the foil loss generated during the coil pattern formation process.

Also, the purpose of the present disclosure is to provide a working coil and a home appliance including the working coil, which are capable of making the current distribution and magnetic flux density distribution of the working coil more uniform by reducing the proximity effect and skin effect of the coil strand included in the working coil.

Also, the purpose of the present disclosure is to reduce power loss occurring during the operation of a home appliance and to increase power efficiency.

Also, the purpose of the present disclosure is to alleviate the phenomenon in which the temperature of a specific area of the working coil becomes excessively higher than that of other areas during the operation of a home appliance.

The purposes of the present disclosure are not limited to the purposes mentioned above, and other purposes and advantages of the present disclosure which are not mentioned will be more clearly appreciated by the embodiments of the present disclosure described below. Furthermore, the purposes and advantages of the present disclosure can be realized by the components described in the claims and combinations thereof.

**Means for Solving Problems**

A home appliance according to an embodiment may include a rectifier circuit rectifying an input voltage and outputting a rectified voltage; a DC link capacitor smoothing the voltage output from the rectifier circuit; an inverter outputting an alternating current using a voltage smoothed by the DC link capacitor; a first working coil connected with the inverter and disposed at a position corresponding to a first heating area; a second working coil connected in series with the first working coil and disposed at a position corresponding to a second heating area; a third working coil connected in series with the first working coil, connected in parallel with the second working coil, and disposed at a position corresponding to a third heating area; a first relay connected between the second working coil and a ground terminal; a second relay connected between the third working coil and a ground terminal; and a controller configured to perform container detection on the first heating area, the second heating area, and the third heating area, and control opening and closing states of the first relay and the second relay according to a result of the container detection.

In an embodiment, when the controller determines that a container is present in the first heating area and the second heating area, the controller may control the first relay to be closed and the second relay to be opened.

In an embodiment, when the controller determines that a container is present in the first heating area and the third heating area, the controller may control the second relay to be closed and the first relay to be opened.

In an embodiment, when the controller determines that a container is present in the first heating area, the second heating area, and the third heating area, the controller may control the first relay and the second relay to be closed.

In an embodiment, the first heating area may be disposed between the second heating area and the third heating area.

A home appliance according to an embodiment may include a rectifier circuit rectifying an input voltage and outputting a rectified voltage; a first DC link capacitor smoothing the voltage output from the rectifier circuit; a first inverter outputting an alternating current using a voltage smoothed by the first DC link capacitor; a second DC link capacitor smoothing the voltage output from the rectifier circuit; a second inverter outputting an alternating current using a voltage smoothed by the second DC link capacitor; a second working coil connected with the first inverter and disposed at a position corresponding to a second heating area; a first working coil connected in series with the second working coil and disposed at a position corresponding to a first heating area; a third working coil connected with the second inverter and disposed at a position corresponding to a third heating area; a fourth working coil connected in series with the third working coil and disposed at a position corresponding to a fourth heating area; a first relay connected between a connection node of the first working coil and the second working coil and a connection node of the third working coil and the fourth working coil; a second relay connected between the first working coil and a ground terminal; a third relay connected between the fourth working coil and a ground terminal; a controller configured to perform container detection on the first heating area, the second heating area, the third heating area, and the fourth heating area, and control opening and closing states of the first relay, the second relay, and the third relay according to a result of the container detection.

In an embodiment, when the controller determines that a container is present in the first heating area and the second heating area, the controller may control the second relay to be closed and the first relay and the third relay to be opened.

In an embodiment, when the controller determines that a container is present in the second heating area and the third heating area, the controller may control the first relay to be closed and the second relay and the third relay to be opened.

In an embodiment, when the controller determines that a container is present in the third heating area and the fourth heating area, the controller may control the third relay to be closed and the first relay and the second relay to be opened.

In an embodiment, when the controller determines that a container is present in the first heating area, the second heating area, and the third heating area, the controller may control the first relay and the second relay to be closed and the third relay to be opened.

In an embodiment, when the controller determines that a container is present in the second heating area, the third heating area, and the fourth heating area, the controller may control the first relay and the third relay to be closed and the second relay to be opened.

In an embodiment, when the controller determines that a container is present in the first heating area, the second heating area, the third heating area, and the fourth heating area, the controller may control the second relay and the third relay to be closed and the first relay to be opened.

In an embodiment, the second heating area may be disposed between the first heating area and the second heating area.

In an embodiment, the third heating area may be disposed between the second heating area and the fourth heating area.

In an embodiment, the second heating area and the third heating area may be disposed between the first heating area and the fourth heating area.

In an embodiment, the home appliance may further include a sixth working coil connected with the first inverter and disposed at a position corresponding to a sixth heating area; a fifth working coil connected in series with the sixth working coil and disposed at a position corresponding to a fifth heating area; a seventh working coil connected with the second inverter and disposed at a position corresponding to a seventh heating area; an eighth working coil connected in series with the seventh working coil and disposed at a position corresponding to an eighth heating area; a fourth relay connected between a connection node of the fifth working coil and the sixth working coil and a connection node of the seventh working coil and the eighth working coil; a fifth relay connected between the fifth working coil and a ground terminal; and a sixth relay connected between the eighth working coil and a ground terminal.

In an embodiment, the controller may perform container detection on the first heating area, the second heating area, the third heating area, the fourth heating area, the fifth heating area, the sixth heating area, the seventh heating area, and the eighth heating area, and may control opening and closing states of the first relay, the second relay, the third relay, the fourth relay, the fifth relay, and the sixth relay according to a result of the container detection.

In an embodiment, when the controller determines that a container is present in the first heating area, the second heating area, the fifth heating area, and the sixth heating area, the controller may control the second relay and the fifth relay to be closed and the first relay, the third relay, the fourth relay, and the sixth relay to be opened.

In an embodiment, when the controller determines that a container is present in the second heating area, the third heating area, the sixth heating area, and the seventh heating area, the controller may control the first relay and the fourth relay to be closed and the second relay, the third relay, the fifth relay, and the sixth relay to be opened.

In an embodiment, when the controller determines that a container is present in the third heating area, the fourth heating area, the seventh heating area, and the eighth heating area, the controller may control the third relay and the sixth relay to be closed and the first relay, the second relay, the fourth relay, and the fifth relay to be opened.

In an embodiment, when the controller determines that a container is present in the first heating area, the second heating area, the third heating area, the fifth heating area, the sixth heating area, and the seventh heating area, the controller may control the first relay, the second relay, the fourth relay, and the fifth relay to be closed and the third relay and the sixth relay to be opened.

In an embodiment, when the controller determines that a container is present in the second heating area, the third heating area, the fourth area, the sixth heating area, the seventh heating area, and the eighth heating area, the controller may control the first relay, the third relay, the fourth relay, and the sixth relay to be closed and the second relay and the fifth relay to be opened.

In an embodiment, when the controller determines that a container is present in the first heating area, the second heating area, the third heating area, the fourth area, the fifth heating area, the sixth heating area, the seventh heating area, and the eighth heating area, the controller may control the second relay, the third relay, the fifth relay, and the sixth relay to be closed and the first relay and the fourth relay to be opened.

In an embodiment, the sixth heating area may be disposed between the fifth heating area and the seventh heating area.

In an embodiment, the seventh heating area may be disposed between the sixth heating area and the eighth heating area.

In an embodiment, the sixth heating area and the seventh heating area may be disposed between the fifth heating area and the eighth heating area.

In an embodiment, the first heating area may be disposed to be adjacent to the fifth heating area.

In an embodiment, the second heating area may be disposed to be adjacent to the sixth heating area.

In an embodiment, the third heating area may be disposed to be adjacent to the seventh heating area.

In an embodiment, the fourth heating area may be disposed to be adjacent to the eighth heating area.

In an embodiment, the home appliance may further include a third DC link capacitor smoothing the voltage output from the rectifier circuit; a third inverter outputting an alternating current using a voltage smoothed by the third DC link capacitor; a ninth working coil connected with the third inverter and disposed at a position corresponding to a ninth heating area; a tenth working coil connected in series with the ninth working coil and disposed at a position corresponding to a tenth heating area; an eleventh working coil connected in series with the ninth working coil, connected in parallel with the tenth working coil, and disposed at a position corresponding to an eleventh heating area; a seventh relay connected between the tenth working coil and a ground terminal; and an eighth relay connected between the eleventh working coil and a ground terminal.

In an embodiment, the controller may perform container detection on the first heating area, the second heating area, the third heating area, the fourth heating area, the fifth heating area, the sixth heating area, the seventh heating area, the eighth heating area, the ninth heating area, the tenth heating area, and the eleventh heating area, and may control opening and closing states of the first relay, the second relay, the third relay, the fourth relay, the fifth relay, the sixth relay, the seventh relay, and the eighth relay according to a result of the container detection.

In an embodiment, when the controller determines that a container is present in the fifth heating area, the sixth heating area, the ninth heating area, and the tenth heating area, the controller may control the second relay and the seventh relay to be closed and the first relay, the third relay, the fourth relay, the fifth relay, the sixth relay, and the eighth relay to be opened.

In an embodiment, when the controller determines that a container is present in the sixth heating area, the seventh heating area, the ninth heating area, and the eleventh heating area, the controller may control the first relay and the eighth relay to be closed and the second relay, the third relay, the fourth relay, the fifth relay, the sixth relay, and the seventh relay to be opened.

In an embodiment, when the controller determines that a container is present in the fifth heating area, the sixth heating area, the seventh heating area, the ninth heating area, the tenth heating area, and the eleventh heating area, the controller may control the first relay, the second relay, the seventh relay, and the eighth relay to be closed and the third relay, the fourth relay, the fifth relay, and the sixth relay to be opened.

In an embodiment, the ninth heating area may be disposed between the tenth heating area and the eleventh heating area.

In an embodiment, the sixth heating area may be disposed to be adjacent to the ninth heating area.

In an embodiment, the fifth heating area may be disposed to be adjacent to the tenth heating area

In an embodiment, the seventh heating area may be disposed to be adjacent to the eleventh heating area,

## Advantageous Effects

According to embodiments, a plurality of coil patterns stacked in the up and down directions are connected to each other in the up and down directions to form a working coil in the form of a pattern coil, thereby increasing the length of the working coil in the up and down direction, so that the pattern cross-sectional area per turn of the working coil can be effectively increased.

According to embodiments, by suppressing the increase in the size of the working coil in the horizontal direction and increasing the pattern cross-sectional area per turn of the working coil, it is possible to effectively suppress the temperature rise of the working coil.

According to embodiments, since the outer shape of the working coil formed in a polygonal shape similar to the outer shape of the cooktop is formed in a polygonal shape similar to the outer shape of the coil module, it is possible to effectively improve the density of the area occupied by the working coil within the cooktop.

According to embodiments, it is possible to increase the heating efficiency of the home appliance by increasing the area of the region where the container is in contact with the working coil.

According to embodiments, a plurality of coil lines stacked in the up and down directions are connected to each other in the up and down directions to form a working coil, and a horizontal direction twist structure and an up-and-down direction twist structure are formed in the working coil, so that it is possible to minimize the increase in the horizontal size of the working coil while increasing the pattern cross-sectional area per turn of the working coil.

According to embodiments, by reducing the size of the working coil while lowering the density of the current flowing in the working coil, it is possible to allow the working coils to be disposed more closely together compared to a cooktop of the same standard, and to maintain maximum output for a longer period of time compared to a cooktop of the same size.

According to embodiments, by using the densely disposed small working coils, it is possible to provide more improved heating efficiency as well as to provide higher output for a longer period of time.

According to embodiments, by allowing the coil assembly to be made of a combination of a plurality of coil modules, the loss of the original substrate used to manufacture the coil module can be reduced, and the space required to dispose the control panel on the cooktop can be effectively secured.

According to embodiments, a wiring for connecting the working coil and the sensing coil to the terminal part is formed in the form of being patterned in the coil module itself, and the connection of the working coil and the sensing coil with the electrical component can be made only by the connection between the terminal part and the electrical component. Accordingly, a connection structure between the electrical component and both the working coil and the sensing coil can be formed very simply.

According to embodiments, in addition to allowing the connection work between the coil assembly and the electrical component to be done easily and quickly, it is possible to effectively prevent that the accommodation space inside the cooktop, in which the coil assembly and the electrical component are accommodated, becomes complicated due to a large number of wirings.

According to embodiments, since the proximity effect and the skin effect of the coil strand included in the working coil are reduced, the current distribution and magnetic flux density distribution of the working coil can become more uniform.

According to embodiments, it is possible to reduce power loss occurring during the operation of a home appliance and to increase power efficiency.

According to embodiments, it is possible to alleviate the phenomenon in which the temperature of a specific area of the working coil becomes excessively higher than that of other areas during the operation of a home appliance.

**Brief Description of Drawings**

FIG. 1 is a perspective view illustrating a home appliance according to an embodiment.

FIG. 2 is a perspective view separately showing a cooktop shown in FIG. 1.

FIG. 3 is a view showing the indicator lamp lighting status of the cooktop shown in FIG. 2.

FIG. 4 is an exploded perspective view showing an exploded state of the cooktop shown in FIG. 2.

FIG. 5 is a view showing a state in which electronic components are installed on the bottom surface of a supporter shown in FIG. 4.

FIG. 6 is a plan view schematically showing the configuration of a coil assembly shown in FIG. 4.

FIG. 7 is a cross-sectional view schematically showing a stacked structure of a coil module shown in FIG. 6.

FIG. 8 is a plan view showing a first example of a layout structure of a first coil module and a second coil module.

FIG. 9 is a view schematically illustrating an example of the cutting state of an original substrate for forming a first coil substrate portion.

FIG. 10 is a plan view showing a second example of a layout structure of a first coil module and a second coil module.

FIG. 11 is a plan view showing another example of a layout structure of a first coil module and a second coil module shown in FIG. 8.

FIG. 12 is a plan view showing another example of a layout structure of a first coil module and a second coil module shown in FIG. 10.

FIG. 13 is a plan view showing a third example of a layout structure of a first coil module and a second coil module.

FIG. 14 is a plan view showing a fourth example of a layout structure of a first coil module and a second coil module.

FIG. 15 is a plan view showing a fifth example of a layout structure of a first coil module and a second coil module.

FIG. 16 is a plan view showing a sixth example of a layout structure of a first coil module and a second coil module.

FIG. 17 is a plan view showing an example of a first coil substrate portion according to an embodiment.

FIG. 18 is an enlarged view illustrating a portion of the first coil substrate portion shown in FIG. 17.

FIG. 19 is a cross-sectional view schematically showing a stacked structure of a first coil portion shown in FIG. 18.

FIG. 20 is a plan view showing an example of the layout structure of a sensing coil.

FIG. 21 shows an example of a layout structure of a sensing coil with respect to a working coil.

FIG. 22 is an enlarged view of a first terminal shown in FIG. 18.

FIG. 23 is an enlarged view of a second terminal shown in FIG. 18.

FIG. 24 is a plan view showing a seventh example of a layout structure of a first coil module and a second coil module.

FIG. 25 is a plan view showing a structure of a coil module according to a first embodiment.

FIG. 26 is a circuit diagram of a home appliance including a coil module according to a first embodiment.

FIG. 27 is a plan view showing a structure of a coil module according to a second embodiment.

FIG. 28 is a circuit diagram of a home appliance including a coil module according to a second embodiment.

FIG. 29 is a plan view showing a structure of a coil module according to a third embodiment.

FIG. 30 is a circuit diagram of a home appliance including a coil module according to a third embodiment.

FIG. 31 is a plan view showing a structure of a coil module according to a fourth embodiment.

FIG. 32 is a circuit diagram of a home appliance including a coil module according to a fourth embodiment.

FIG. 33 is a plan view showing a structure of a coil module according to a fifth embodiment.

FIG. 34 is a circuit diagram of a home appliance including a coil module according to a fifth embodiment.

FIG. 35 is a circuit diagram of a sensing circuit according to an embodiment.

FIG. 36 is a diagram illustrating a waveform of a resonance signal output from an output node of a sensing circuit according to an embodiment.

FIG. 37 is a diagram illustrating a waveform of a square wave output from a comparator of a sensing circuit according to an embodiment.

## Embodiments for Implementing Invention

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

The present invention may not be limited to embodiments disclosed below, and various changes may be made and the present invention may be implemented in various different forms. The present embodiment is provided solely to ensure that the disclosure of the present invention is complete and to fully inform those skilled in the art of the scope of the invention. Therefore, it should be understood that the present invention is not limited to the embodiments disclosed below, but includes all changes, equivalents or substitutes included in the technical idea and the scope of the present invention, as well as substitution of components of an embodiment with components of another embodiment and addition of components.

The attached drawings are only for easy understanding of the embodiments disclosed herein, and the technical ideas disclosed herein are not limited by the attached drawings. Further, it should be understood that the present invention includes all modifications, equivalents or substitutions that fall within the technical concept and scope of the present invention. In drawings, components may be expressed exaggeratedly large or small in size or thickness for convenience of understanding or the like, but the scope of protection of the present invention should not be interpreted as limited by the same.

The terms used herein are merely used to describe specific implementations or embodiments, and are not intended to limit the present invention. Further, singular expressions include plural expressions, unless the context clearly dictates otherwise. Herein, terms such as "comprise", "include", "have", "be provided with", "composed of", and the like are intended to indicate the existence of features, numbers, steps, operations, components, parts, or combinations thereof described herein. That is to say, it should be understood that terms such as "comprise", "include", "have", "be provided with", "composed of", and the like as used herein do not exclude in advance the presence or addition of one or more other features, numbers, steps, operations, components, parts, or combinations thereof.

Terms including ordinal numbers, such as first, second, and the like, may be used to describe various components, but the components are not limited by the terms. The above terms are used only for the purpose of distinguishing one component from another.

When a first component is described as being "connected" or "coupled" to a second component, it should be understood that the components may be directly connected or coupled to each other, but a third component may be interposed between the components. On the other hand, when it is described that the first component is "directly connected" or "directly coupled" to the second component, it should be understood that there are no other components interposed therebetween.

When a component is described to be "on top of" or "under" another component, it is understood that the component may be disposed at contact with a top surface (or a bottom surface) of the other component, as well as that still another component may be interposed therebetween.

Unless otherwise defined, all terms used herein, including technical or scientific terms, have the same meaning as commonly understood by a person of ordinary skill in the technical field to which the present invention pertains. Terms defined in commonly used dictionaries should be interpreted as having a meaning consistent with the meaning in the context of the related technology, and unless explicitly defined in the present application, should not be interpreted in an ideal or excessively formal sense.

When the appliance is placed on the floor, the direction in which the door is installed is defined as forward based on the center of the home appliance. Therefore, the direction of entering the inside of the appliance after opening the door is rearward. And, the horizontal direction perpendicular to the front and rear directions of the home appliance, that is, the width direction of the home appliance when looking at the home appliance from before the door of the home appliance may be referred to as the left and right directions.

For convenience, the left and right directions may be referred to as a first direction. Then, a right side may be referred to as one side in the first direction, and a left side may be referred to as the other side in the first direction.

Additionally, the width direction of the home appliance may be referred to as the lateral direction. Then, a right side may be referred to as one side in the lateral direction, and a left side may be referred to as the other side in the lateral direction.

Additionally, the direction of gravity may be defined as a down direction, and a direction opposite to the direction of gravity may be defined as an up direction.

For convenience, the directions toward the front and the rear may be referred to as the second direction. Then, the front side may be referred to as one side in the second direction, and the rear side may be referred to as the other side in the second direction.

Additionally, the up and down directions described above may be referred to as a third direction. Then, the up direction may be referred to as one side in the third direction, and the down direction may be referred to as the other side in the third direction.

Additionally, the up and down directions described above may be referred to as a vertical direction. Then, both the front and rear directions and the left and right directions, that is, both the first direction and the second direction may be referred to as a horizontal direction.

Throughout the present document, "A and/or B" means A, B, or A and B, unless otherwise specified, and "C to D" means equal to or greater than C and equal to or smaller than D unless otherwise specified.

[Overall structure of home appliance]

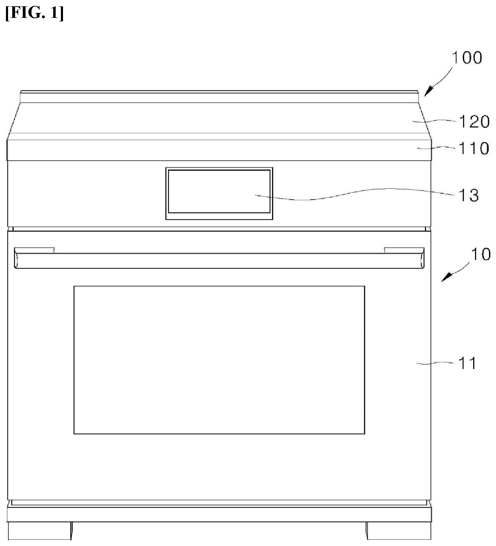

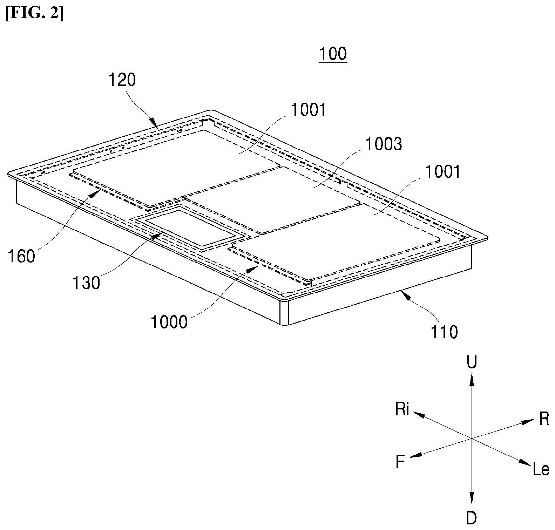

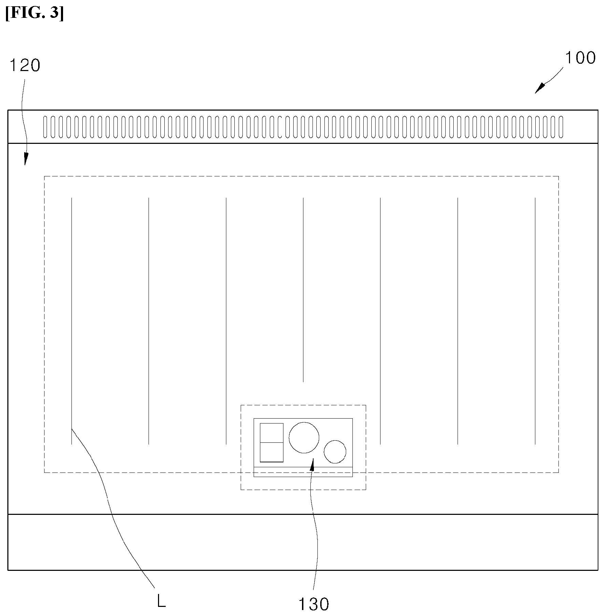

FIG. 1 is a perspective view illustrating a home appliance according to an embodiment; FIG. 2 is a plan view separately showing a cooktop shown in FIG. 1; and FIG. 3 is a view showing the indicator lamp lighting status of the cooktop shown in FIG. 2.

Referring to FIGS. 1 to 3, the home appliance according to an embodiment may include the cooktop 100. Additionally, the home appliance according to an embodiment may further include an oven part 10. In the embodiment shown in FIGS. 1 to 3, the home appliance is, for example, implemented in the form of an oven range.

The home appliance according to an embodiment provided in the form of an oven range can provide both the function of an oven, which is a closed home appliance, and the function of a cooktop, which is an open home appliance. The home appliance may include the oven part 10 and the cooktop 100.

The oven part 10 may have a cooking chamber formed therein. In the oven part, food can be cooked as the inside of the cooking chamber is heated.

In the oven part 10, a heating part may be provided to heat the cooking chamber. The heating part may be provided as a heating device using gas fuel, or may be provided as a heater using electricity.

In the home appliance, a door 11 may be rotatably provided to selectively open and close the cooking chamber. As an example, the door may be provided in the form of opening and closing the cooking chamber in a pull-down manner in which the upper end pivots up and down around the lower end thereof.

In the front surface upper portion of the home appliance, a control panel 13 (hereinafter, referred to as a "main control panel") may be provided. The main control panel 13 may form a part of the front surface exterior of the home appliance. The main control panel 13 may be provided with various switches for adjusting the operation of the home appliance, a display for displaying the operation state of the home appliance, and the like.

In the upper side of the oven part 10, the cooktop 100 may be disposed. The cooktop is provided to heat food or a container containing food placed on the top of the cooktop 100.

[Overall structure of cooktop]

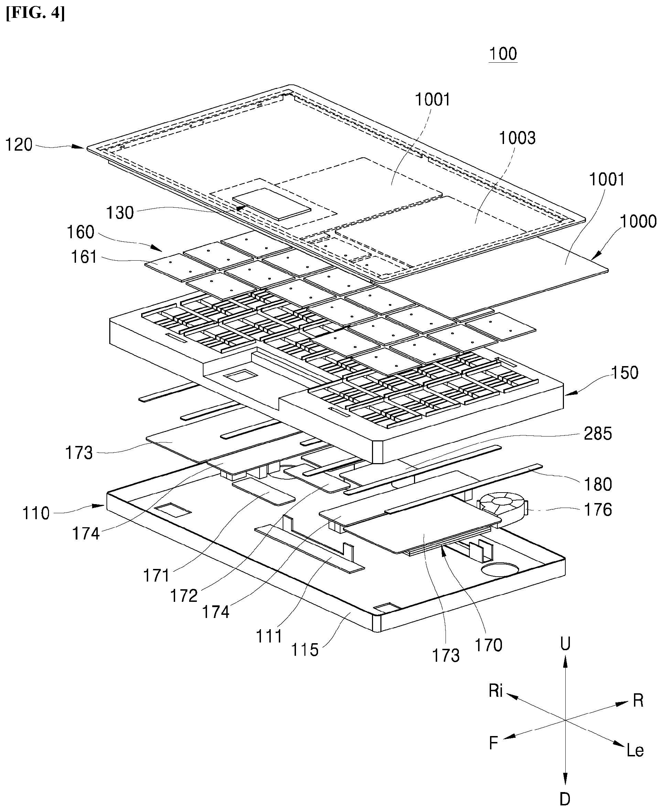

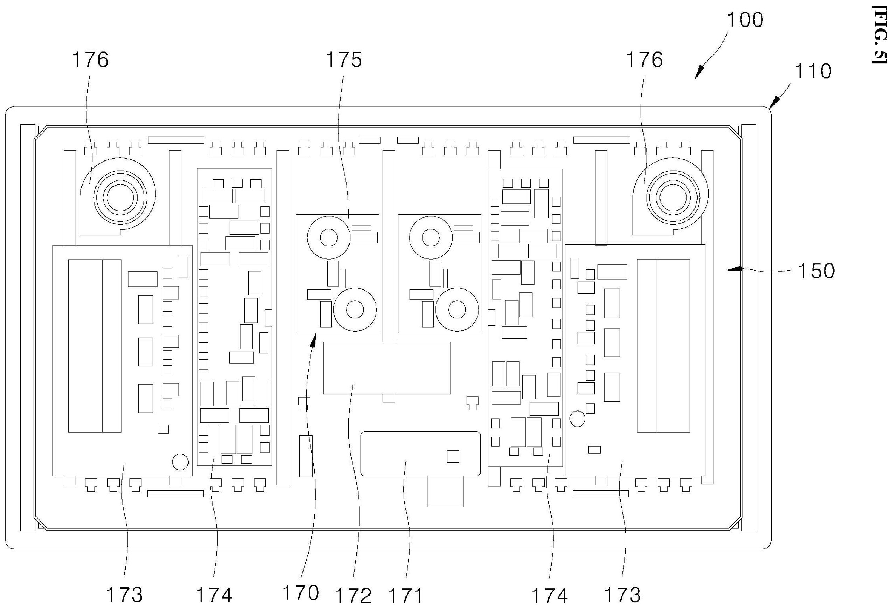

FIG. 4 is an exploded perspective view showing an exploded state of the cooktop shown in FIG. 2, and FIG. 5 is a view showing a state in which electronic components are installed on the bottom surface of a supporter shown in FIG. 4.

Referring to FIGS. 1 to 5, the cooktop 100 may include a case 110 and a top plate 120. In an embodiment, the exterior of the cooktop 100 may be formed by the case 110 and the top plate 120. The case 110 may be disposed at the lower side of the top plate 120, and may form a front surface, a rear surface, side surfaces, and a bottom surface of the cooktop. The top plate 120 may be disposed on an upper end of the cooktop 100, and may form a top surface exterior of the cooktop 100.

In the inside of the case 110, an accommodation space may be formed. The accommodation space formed in the inside of the case 110 may be opened toward the upper side. As an example, the case 110 may be formed in a hexahedral shape with an open upper side. In the accommodation space surrounded by the top plate 120 and the case 110, various internal components may be accommodated to constitute the cooktop 100.

In an embodiment, the case 110 may include a bottom portion 111. The bottom portion 111 may form a bottom surface of the case 110 to define a lower boundary surface of the accommodation space. The bottom portion 111 may be disposed under the top plate 120 to form a plane parallel to the top plate 120.

Additionally, the case 110 may include a side wall portion 115. The side wall portion 115 may form the front surface, the rear surface, and both side surfaces of the case 110 to be formed in a vertical wall shape extending upward from an edge of the bottom portion 111. The side wall portion 115 may define a horizontal boundary surface of the accommodation space.

Additionally, the cooktop 100 may be provided with a heating part for heating food to be cooked or a container containing the food. The heating part may be provided with at least more than one burner. For example, the burner may be provided in a form of including a working coil or a heating wire coil using electricity.

In this embodiment, the cooktop 100 is illustrated as being provided in the form of an induction heating device. The burner of the cooktop 100 may include a working coil. The burner including the working coil may be operated by an alternating current provided by the inverter to generate a magnetic field. The magnetic field generated in the burner including the working coil can generate an eddy current in the container. The container may be heated by an eddy current, and as the container is heated, the food contained in the container may be heated.

The cooktop 100 according to an embodiment may be provided with a control panel 130. The control panel 130 may be disposed at the top plate 120. The control panel 130 may be provided with a manipulation part including various switches for adjusting the operation of the cooktop 100, a display for displaying the operation state of the cooktop 100, and the like.

The cooktop 100 may be provided with a plurality of indicator lamps L. The indicator lamp L may be indicated in the top plate 120 of the cooktop. The indicator lamp L may indicate information such as the presence or absence of a container, the location of the container, the heating state of the container, or the temperature of the container.

The cooktop 100 according to an embodiment may include a coil assembly 1000. The coil assembly 1000 may be provided to constitute the heating part of the cooktop 100, and may be disposed at an accommodation space inside the cooktop 100.

Additionally, the cooktop 100 may include a supporter 150. The supporter 150 may be disposed at the lower side of the top plate 120. The supporter 150 may be disposed at a space surrounded by the top plate 120 and the case 110, that is, the accommodation space.

The supporter 150 may form a frame for supporting various internal components constituting the cooktop 100 in the inside of the cooktop 100. For example, the supporter 150 may be formed in a hexahedral shape with an open lower side. For example, the supporter 150 may be formed approximately in a shape of an upside-down version of the case 110 to have a size slightly smaller than that of the case 110.

In an embodiment, the accommodation space may be formed in the inside of the supporter 150 to be formed as a space surrounded by the bottom portion 111 of the case 110 and the supporter 150. That is, various internal components constituting the cooktop 100 may be accommodated in the inside of the supporter 150.

In an embodiment, the supporter 150 may also provide a coil base function. That is, on the supporter 150 a ferrite core 160 may be installed, and the coil assembly 1000 may be installed on the upper side of the supporter 150 on which the ferrite core 160 is installed in this way.

As an example, the ferrite core 160 may be formed by a combination of a plurality of ferrite modules 161 provided as separate elements. That is, the ferrite core 160 may be provided in a structure in which it may be separated into a plurality of ferrite modules 161.

In the present embodiment, the ferrite modules 161 are illustrated as each being provided to be coupled to the supporter 150. To this end, the supporter 150 may have a structure formed therein for the fitting with the ferrite modules 161. Each ferrite module 161 may be coupled to the supporter 150 by being fitted into the structure.

Each ferrite module 161 includes ferrite capable of forming a magnetic field around the ferrite module 161. As an example, each ferrite module 161 may be provided in a form in which ferrite is insert-injected.

According to the ferrite core 160 formed by a combination of the plurality of ferrite modules 161 provided as described above, the number of work hours required to install the ferrite core 160 in the cooktop 100 can be reduced. Additionally, the ferrite core 160 has the advantage in that, if a portion of the ferrite core 160 is damaged, its repair can be done by replacing the ferrite module 161 corresponding to that portion.

Each of the indicator lamps L may be implemented by a lighting module 180. The lighting module 180 is provided to emit light toward a light display area of the top plate 120. As an example, the indicator lamp L may be implemented by light irradiated by the lighting module 180 to the light display area of the top plate 120.

In this embodiment, the light display area is an area in which light emitted from the lighting module 180 can be recognized from the outside through the top plate 120, that is, an area in which light emitted from the lighting module 180 is irradiated from on the top plate 120, and is defined as a predetermined partial area of the entire area of the top plate 120.

As an example, the light display area may be a virtual area designated as a portion where light emitted from the lighting module 180 is to be irradiated from on the top plate 120. In this case, the light display area is not a part noticeably marked on the top plate 120 by a method such as performing a separate surface treatment on the surface of the top plate 120, but only a virtual area.

As another example, the light display area may be an area noticeably marked on the top plate 120 by a method such as performing a separate surface treatment on the surface of the top plate 120.

The lighting module 180 may include a light source. As an example, an LED may be applied as a light source, but the kind of light source applicable as a light source is not limited to an LED.

The lighting module 180 may include a plurality of light sources, which may be disposed at each lighting module 180 to be spaced apart from each other by a predetermined interval in front and rear directions. As an example, the lighting module 180 may be provided in a form in which a plurality of light sources are mounted on a PCB in the form of a PCB. The number of light sources for each lighting module 180 and the length of the PCB in front and rear directions may be appropriately set according to the size or intensity of the lighting to be implemented through the lighting module 180.

Additionally, a plurality of lighting modules 180 may be disposed at the cooktop, and the plurality of lighting modules 180 may be disposed to be spaced apart from each other by a predetermined interval in the lateral direction. The number of lighting modules 180 and the distance between the lighting modules 180 may be appropriately set by considering the size of the working coil and number of the working coils, the distance between the working coils, and the like.

At least a portion of the lighting module 180 may be disposed between the supporter 150 and the bottom portion 111. As an example, the lighting module 180 may be disposed at the accommodation space. More specifically, the lighting module 180 may be disposed at a space surrounded by the bottom portion 111 of the case 110 and the supporter 150.

In the inside of the cooktop 100, that is, in the accommodation space, various electronic components may be installed. For example, in the inner space of the cooktop 100, a main PCB 171, a switching mode power supply (SMPS), an inverter PCB, a resonance PCB (Resonant PCB), a noise filter (EMI filter), a fan 176, and the like may be disposed.

Hereinafter, the electronic components will be collectively referred to as an electronic unit 170. The electronic unit 170 may include at least one of a power processing part and a coil controlling part. The power processing part may be provided to supply power to the coil assembly 1000, and the power processing part may include the switching mode power supply (SMPS) 162, the noise filter (EMI filter 165), and the like. The coil controlling part is provided to control the operation of the coil assembly 1000, and the coil controlling part may include an inverter PCB 174, and the like.

[Overall structure of coil assembly]

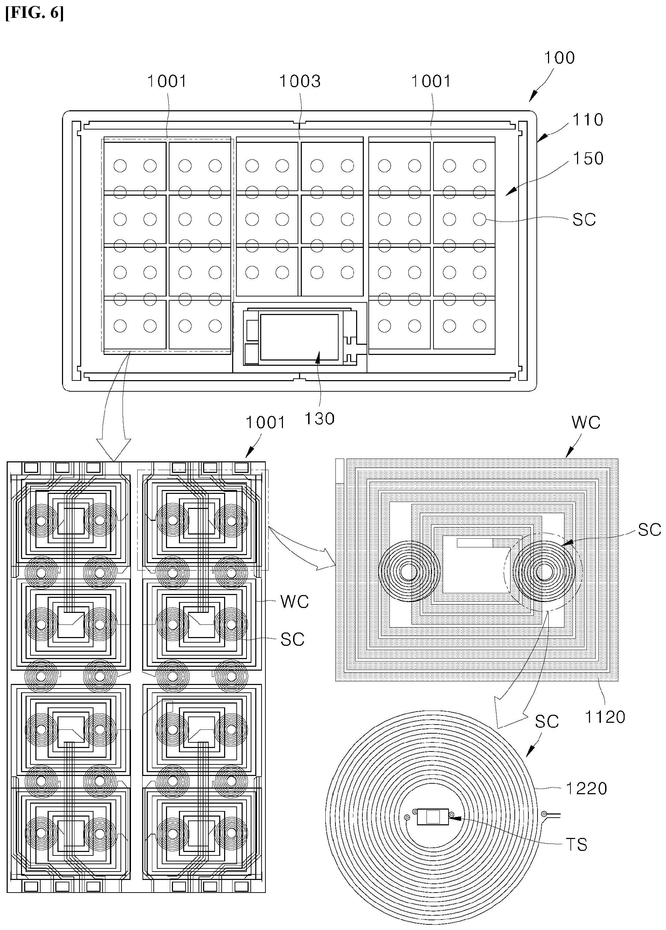

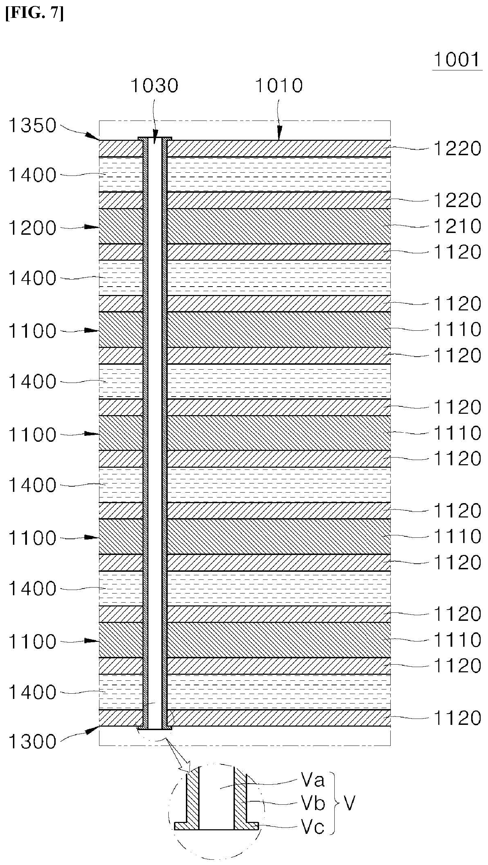

FIG. 6 is a view schematically showing the configuration of the coil assembly shown in FIG. 4, and FIG. 7 is a cross-sectional view schematically showing a stacked structure of a coil module shown in FIG. 6.

Referring to FIGS. 4 and 6, the coil assembly 1000 may include a plurality of working coils WC arranged in a horizontal direction. As an example, in the coil assembly 1000, a plurality of working coils WC may be arranged along the first direction, that is, the lateral direction, and a plurality of working coils WC may be arranged in the second direction, that is, the front and rear directions.

The coil assembly 1000 may include at least one coil module 1001, 1003. In the present embodiment, the coil assembly 1000 is illustrated as including a plurality of coil modules 1001, 1003.

As an example, the coil assembly 1000 may include a plurality of coil modules 1001, 1003 arranged in the horizontal direction. For example, the coil assembly 1000 may include a plurality of coil modules 1001, 1003 arranged in the first direction.

In each of the coil modules 1001, 1003, as illustrated in FIGS. 6 and 7, a plurality of working coils WC may be disposed at the horizontal direction. Each of the working coils WC may be provided in a form in which a spiral coil is formed as a pattern on a printed circuit board. That is, the working coil WC may be provided in the form of a pattern formed in the coil modules 1001, 1003.

Each of the coil modules 1001, 1003 may include a coil substrate-stacked body 1010. The coil substrate-stacked body 1010 may include a plurality of first coil substrate portions 1100 stacked in the up and down directions (or perpendicular direction).

Each of the first coil substrate portions 1100 may include a first coil portion 1120. As an example, the first coil portion 1120 may be formed as a result of a metal foil stacked on the surface of the first coil substrate portion 1100 being patterned into a spiral coil shape.

In an embodiment, a plurality of first coil substrate portions 1100 may be stacked in the up and down directions to form one coil module 1001, 1003, and thereby, a plurality of first coil portions 1120 may be stacked in the up and down directions. And the plurality of first coil portions 1120 stacked in the up and down directions may be connected to each other in the up and down directions to form each one of the working coils WC.

Additionally, each first coil substrate portion 1100 may have a plurality of first coil portions 1120 arranged in one direction (e.g., the horizontal direction), and accordingly, the coil module 1001, 1003 may include a plurality of working coils WC arranged in the horizontal direction.

Additionally, the coil assembly 1000 according to an embodiment may include a sensing coil SC for sensing the presence of a container, as shown in FIGS. 6 to 7. Each of the coil modules 1001, 1003 may include a plurality of sensing coils SC arranged in the horizontal direction. As an example, in the coil assembly 1000, a plurality of sensing coils SC may be arranged along the first direction, that is, the lateral direction, and a plurality of sensing coils SC may be arranged in the second direction, that is, the front and rear directions.

Each of the sensing coils SC may be provided in a form in which a spiral coil is formed as a pattern on a printed circuit board. That is, the sensing coil SC may be provided in the form of a pattern formed in the coil modules 1001, 1003.

In an embodiment, the coil substrate-stacked body 1010 may include at least one second coil substrate portion 1200. The second coil substrate portion 1200 may be stacked in the up and down directions together with the first coil substrate portion 1100. That is, at least one second coil substrate portion 1200 and a plurality of first coil substrate portions 1100 may be stacked in the up and down directions to form one coil module 1001, 1003. Accordingly, in each of the coil modules 1001, 1003, at least a portion of the working coil WC and the sensing coil SC may be arranged in the up and down directions.

Each of the second coil substrate portions 1200 may include a second coil portion 1220. As an example, the second coil portion 1220 may be formed as a result of a metal foil stacked on the surface of the second coil substrate portion 1200 being patterned into a spiral coil shape.

Each sensing coil SC may be formed by one second coil portion 1220, or may be formed as a result of connecting a plurality of second coil portions 1220 stacked in the up and down directions to each other in the up and down directions.

Additionally, each first coil substrate portion 1200 may have a plurality of second coil portions 1220 arranged in the horizontal direction, and accordingly, the coil module 1001, 1003 may include a plurality of sensing coils SC arranged in the horizontal direction.

Additionally, the coil assembly 1000 according to an embodiment may further include a temperature sensor TS. The temperature sensor TS may be provided to measure the temperature of the container, and may be disposed at the second coil substrate portion 1200.

The temperature sensor TS may be disposed at the inner side of the sensing coil SC in the horizontal direction. For example, the temperature sensor TS may be installed in the second coil substrate portion 1200 to be disposed within an area surrounded by the sensing coil SC.

In the present disclosure, embodiments are described in which the coil assembly 1000 is used in a cooking appliance. However, in another embodiment, the coil assembly 1000 may be applied to other home appliances requiring induction heating. For example, the coil assembly 1000 may be mounted in a washing machine to be used to heat a water tank, drum, or laundry container in the inside of the washing machine, or to heat the washing water. As another example, the coil assembly 1000 may be mounted on a water purifier to be used to heat a hot water pipe or a water tank. As still another example, the coil assembly 1000 may be mounted on a clothes dryer or a clothes manager to be used to heat air for drying clothes. As yet another example, the coil assembly 1000 may be mounted on an electric pot or a rice cooker to be used to heat the liquid or food in the inside of the device.

[Layout structure of coil modules]

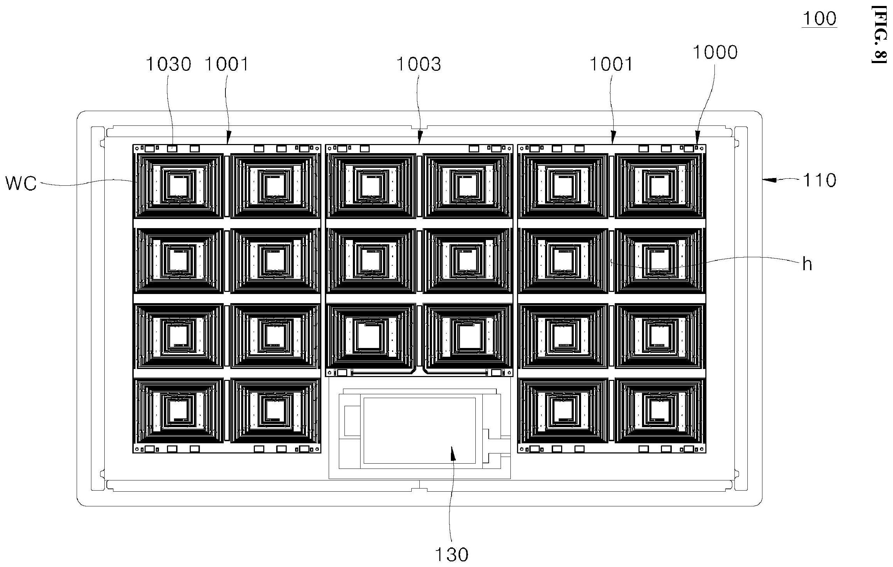

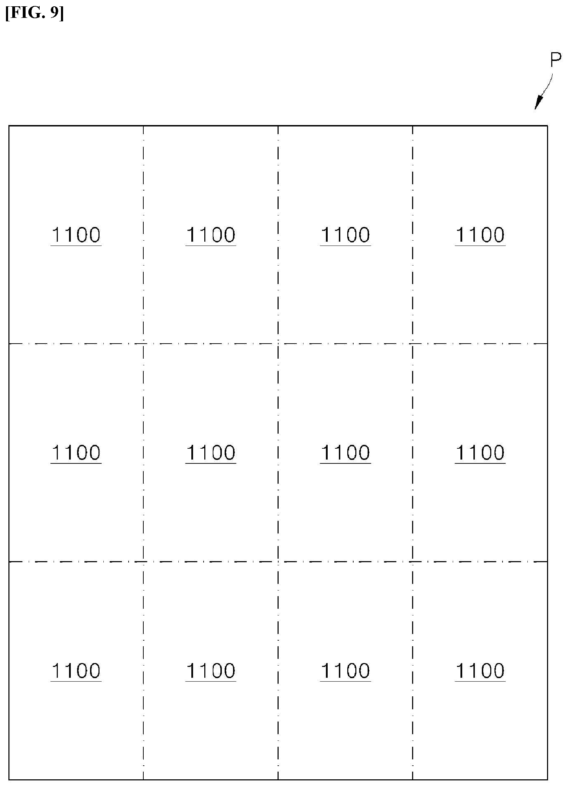

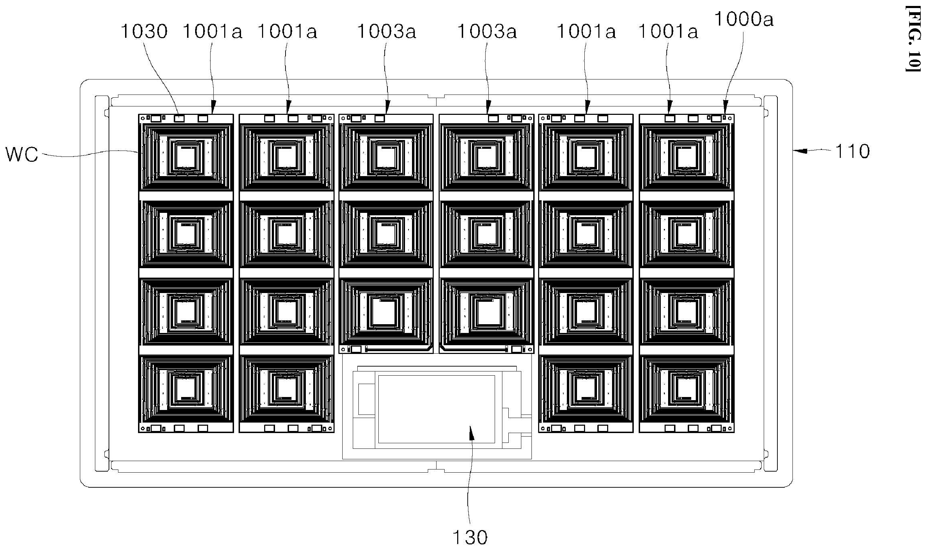

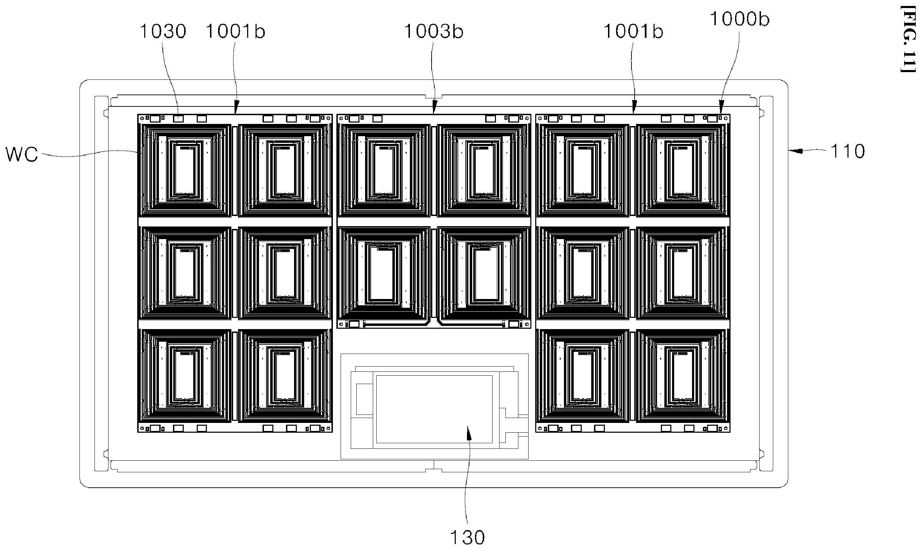

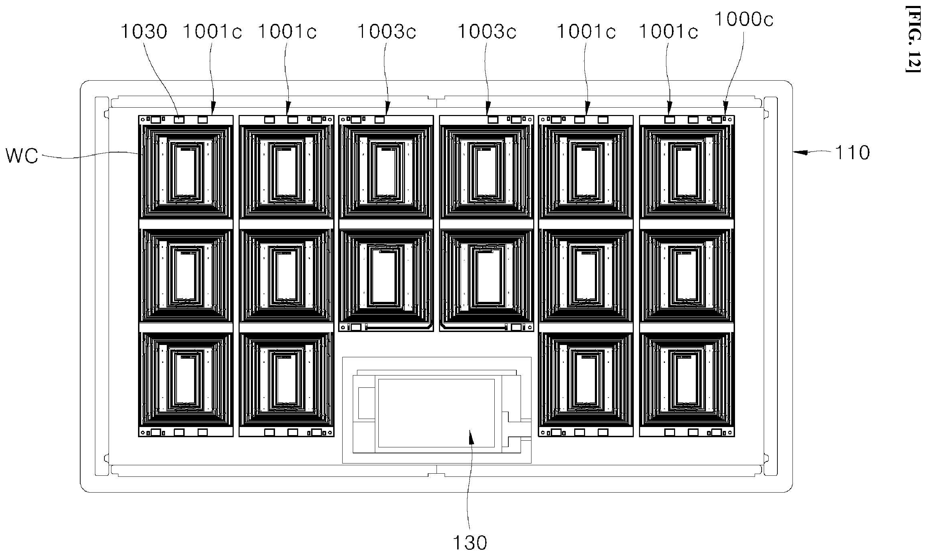

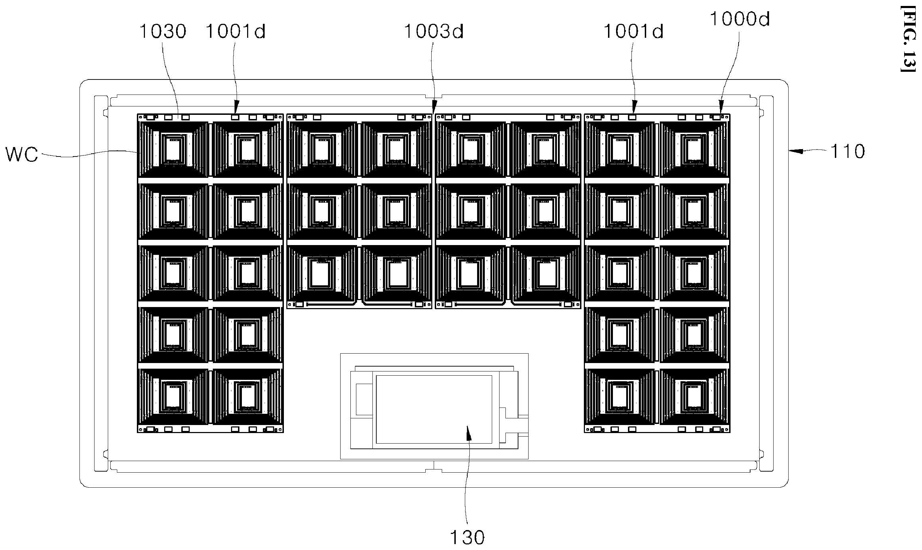

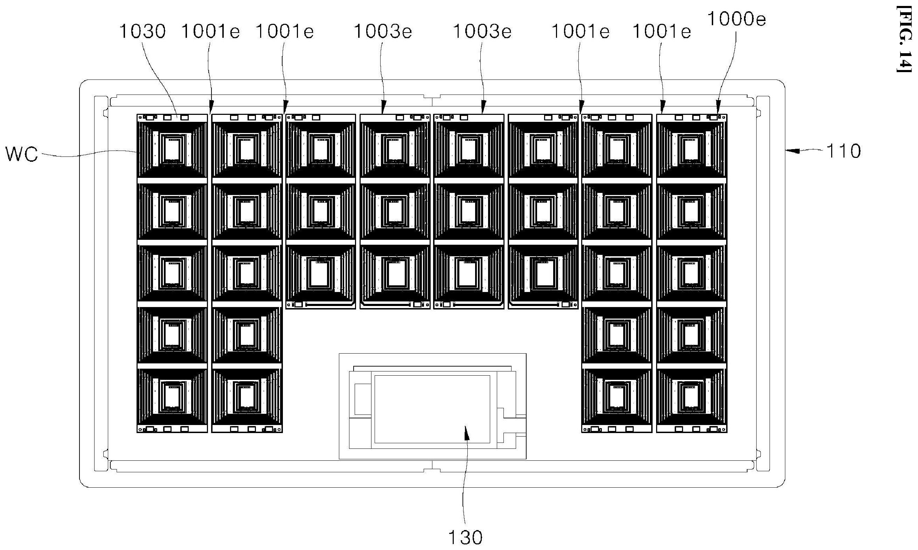

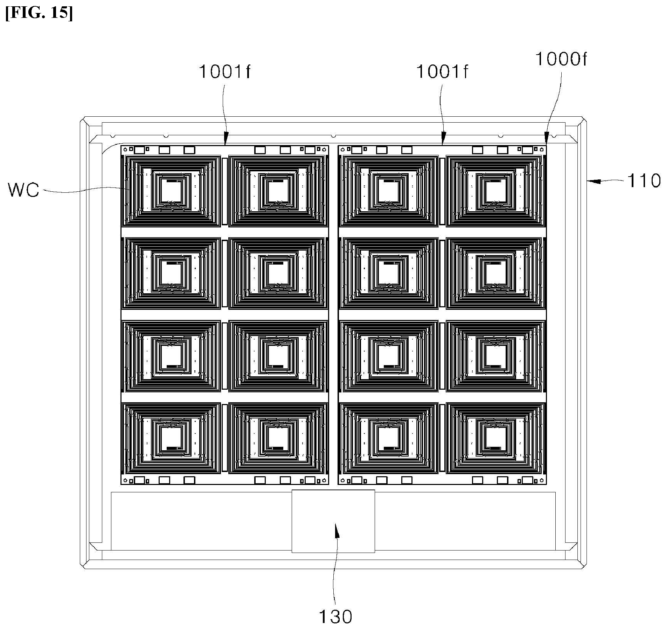

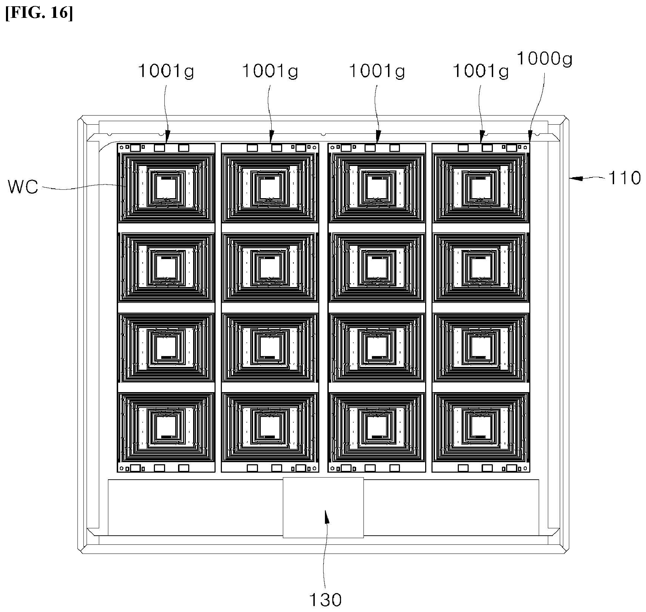

FIG. 8 is a plan view showing a first example of a layout structure of a first coil module and a second coil module, and FIG. 9 is a view schematically illustrating an example of the cutting state of an original substrate for forming a first coil substrate portion. Also, FIG. 10 is a plan view showing a second example of a layout structure of a first coil module and a second coil module; FIG. 11 is a plan view showing another example of a layout structure of a first coil module and a second coil module shown in FIG. 8; and FIG. 12 is a plan view showing another example of a layout structure of a first coil module and a second coil module shown in FIG. 10. Also, FIG. 13 is a plan view showing a third example of a layout structure of a first coil module and a second coil module, and FIG. 14 is a plan view showing a fourth example of a layout structure of a first coil module and a second coil module. Also, FIG. 15 is a plan view showing a fifth example of a layout structure of a first coil module and a second coil module, and FIG. 16 is a plan view showing a sixth example of a layout structure of a first coil module and a second coil module.

Referring to FIGS. 4 and 8, the coil assembly 1000 according to an embodiment may include a plurality of coil modules 1001, 1003. The plurality of coil modules 1001, 1003 may be arranged in the coil assembly 1000 along the first direction (e.g., horizontal direction).

As described above, the cooktop 100 according to an embodiment may include the control panel 130. The control panel 130 may be disposed at the top plate 120 at a position biased toward the front.

With respect to the first direction (e.g., horizontal direction), the control panel 130 may be disposed approximately at the center of the coil assembly 1000. With respect to the second direction (e.g., vertical direction), the control panel 130 may be disposed at a position biased toward the front side of the coil assembly 1000.

The coil assembly 1000 may be disposed at the lower side of the top plate 120, but may not be disposed at the lower side of an area of the top plate 120, which is occupied by the control panel 130. For example, the working coil WC may be disposed at the lower side of only an area of the top plate 120, which is not occupied by the control panel 130, and may not be disposed at the lower side of an area of the top plate 120, which is occupied by the control panel 130.

The coil assembly 1000 may include several types of coil modules 1001, 1003 having different sizes. In the present embodiment, the coil modules 1001, 1003 are illustrated as including a first coil module 1001 and a second coil module 1003. Each of the first coil module 1001 and the second coil module 1003 may include a plurality of working coils WC. In an embodiment, the second coil module 1003 may include working coils WC whose number is smaller than that of the first coil module 1001.

In an embodiment, the first coil module 1001 and the second coil module 1003 may be arranged along the first direction (e.g., horizontal direction) in the coil assembly 1000. Additionally, with respect to the second direction (e.g., vertical direction, the length of the second coil module 1003 may be set shorter than the length of the first coil module 1001. That is, the second coil module 1003 may be provided in a form that has a shorter second direction length and includes a smaller number of working coils WC than the first coil module 1001.

In the coil assembly 1000, a pair of first coil modules 1001 and at least one second coil module 1003 may be arranged along the first direction. In this case, the pair of first coil modules 1001 may be disposed to be spaced apart from each other along the first direction. And at least one second coil module 1003 may be disposed between the pair of first coil modules 1001.

For example, similarly to the control panel 130, at least one second coil module 1003 may be disposed at the first direction center of the coil assembly 1000. At least one second coil module 1003 and the control panel 130 may be disposed on the same straight line in the second direction.

With respect to the first direction, the control panel 130 may be disposed between the pair of first coil modules 1001. Additionally, with respect to the second direction, the control panel 130 may be disposed at a position more biased toward one side than the second coil module 1003, for example, at the front side of the second coil module 1003. Accordingly, at least a portion of the control panel 130 can be disposed at an area surrounded by the pair of first coil modules 1001 and the second coil module 1003.

That is, the control panel 130 may be disposed at a position where visual information provided through the control panel 130 can be easily seen by the user, and in a position where the user can easily operate the control panel 130. The control panel 130 occupies a predetermined area on the top surface of the cooktop 100.

Additionally, since the working coil WC cannot be disposed at the area where the control panel 130 occupies on the top surface of the cooktop 100, the working coil WC must be disposed at the remaining area except the area occupied by the control panel 130. Accordingly, the coil assembly 1000 with the working coils WC is disposed at an area where the control panel 130 does not occupy on the top surface of the cooktop 100. For example, the horizontal direction outer shape of the coil assembly 1000 may be formed in a shape of an upside-down version of a "[ ]" shape.

The coil assembly 1000 may include coil modules 1001, 1003 provided with working coils WC, wherein the coil modules 1001, 1003 are of several kinds and have different second direction lengths. In the present embodiment, the coil assembly 1000 is illustraed as including two kinds of coil modules 1001, 1003, that is, the first coil module 1001 and the second coil module 1003.

As an example, the horizontal direction outer shape of the coil module 1001, 1003 (hereinafter, referred to as "outer shape of the coil module") may be formed in a rectangular shape. That is, the outer shapes of the first coil module 1001 and the second coil module 1003 may be formed in a rectangular shape, respectively.

For example, the shape of the second coil module 1003 may be formed in a rectangular shape having a second direction length different from that of the first coil module 1001. And the second coil module 1003 and the control panel 130 may be disposed on the same straight line in the second direction, and the second coil module 1003 may be disposed at the rear side of the control panel 130.

Considering that the second coil module 1003 and the control panel 130 are disposed on the same straight line in the second direction, the second direction length of the second coil module 1003 is set to be shorter than the second direction length of the first coil module 1001.

As described above, the coil assembly 1000 may be made of a combination of a plurality of coil modules 1001, 1003 arranged in the horizontal direction, and each of the coil modules 1001, 1003 may be formed in a rectangular shape. That is, the coil assembly 1000 may not be formed by a single coil module formed in a shape of an upside-down version of a "Ⅱ" shape, but by a combination of a plurality of coil modules 1001, 1003 formed in rectangular shapes.

In an embodiment, as shown in FIGS. 8 and 9, the first coil substrate portion 1100 forming each of the coil modules 1001, 1003 may be formed by a copper clad laminate (CCL). Each copper clad laminate forming each first coil substrate portion 1100 may be provided as a result of cutting the original substrate P of the copper clad laminate (hereinafter, referred to as "original substrate").

In a case where the first coil substrate portion 1100 is formed in the "Ⅱ" shape or an inverted shape of the "Ⅱ" shape, when the first coil substrate portion 1100 is manufactured by cutting the original substrate P, a loss of the original substrate P occurs as much as the amount cut out to secure a space for disposing the control panel 130. That is, in a case where the coil assembly 1000 is formed of one coil module 1001, 1003, there is a problem in that the loss of the original substrate P used to manufacture the first coil substrate portion 1100 increases.

On the other hand, in a case where the coil assembly 1000 is formed of a combination of a plurality of coil modules 1001, 1003, it is possible that each of the coil modules 1001, 1003 is formed in a rectangular shape. That is, the coil assembly 1000 can be formed in a "Ⅱ" shape or in a shape of an upside-down version of the "Ⅱ" shape by a combination of various kinds of coil modules 1001, 1003 having different sizes, for example, the first coil module 1001 and the second coil module 1003.

Accordingly, when manufacturing the first coil substrate portion 1100 by cutting the original substrate P, the original substrate P can be cut into a rectangular shape, and thereby, it is possible to reduce the loss occurring in the original substrate P used to manufacture the first coil substrate portion 1100.

In an embodiment, the working coil WC may be formed in a shape including a polygonal shape. For example, the horizontal direction outer shape of the working coil WC (hereinafter, referred to as "outer shape of the working coil") may be a polygonal shape.

As an example, the outer shape of the working coil WC may be approximately rectangular, and the horizontal direction outer shape of the cooktop 100 (hereinafter referred to as "outer shape of the cooktop") is also a shape close to an approximate rectangle. Therefore, it is preferable that the horizontal direction outer shape of the coil module 1001, 1003 (hereinafter, referred to as "outer shape of the coil module") is rectangular.

Since the outer shape of the coil module 1001, 1003 is formed in a rectangular shape similar to the outer shape of the working coil WC, it is possible to effectively increase the density of the area in the coil module 1001, 1003, which is occupied by the working coil WC. Additionally, since the outer shape of the coil module 1001, 1003 is formed in a rectangular shape similar to the outer shape of the cooktop 100, it is possible to effectively increase the density of the area in the cooktop 100, which is occupied by the coil module 1001, 1003.

In other words, since the outer shape of the coil module 1001, 1003 is formed in a polygonal shape similar to the outer shape of the working coil WC and the outer shape of the cooktop 100, it is possible to effectively increase the density of the area in the cooktop 100, which is occupied by the working coil WC, thereby effectively increasing the extent of the area in the cooktop 100, which can heat the container.

Accordingly, the extent of the area in the cooktop 100, in which the container is in contact with the working coil WC can be increased, so that the heating efficiency of the cooktop 100 can be effectively improved.

On the other hand, the difference in length between the first coil module 1001 and the second coil module 1003 in the second direction may be adjusted by the difference in the number of working coils WC in the second direction. For example, working coils WC of the same size and shape may be provided to both the first coil module 1001 and the second coil module 1003, and the number of working coils WC in the second direction in the second coil module 1003 may be set to be one or more less than the number of working coils WC in the second direction in the first coil module 1001.

In this way, by adjust the number of working coils WC by varying the lengths of the first coil module 1001 and the second coil module 1003, even if the size of the coil module 1001, 1003 is changed, there is no need to design the size and shape of the working coil WC differently accordingly. That is, various kinds of coil modules 1001, 1003 having different second direction lengths may all be provided in a form including one kind of a working coil WC.

Accordingly, not only can the cost and time required to design the working coil WC be reduced, but also various kinds of coil modules 1001, 1003 having different second direction lengths can be manufactured more easily and quickly at a lower cost.

In an embodiment, the control panel 130 and the second coil module 1003 may be disposed at the first direction center of the top surface of the cooktop 100, and first coil modules 1001 may be disposed at the both sides of the top surface of the cooktop 100 in the first direction.

As an example, the second direction length of the first coil module 1001 may be set to be approximately similar to the second direction length of the top surface of the cooktop 100. And the second direction length difference between the first coil module 1001 and the second coil module 1003 may be set to be greater than or equal to the second direction length of the working coil WC.

Accordingly, while most area of the top surface of the cooktop 100 can be filled with working coils WC, it is possible to secure an area necessary for disposing the control panel 130 on the top surface of the cooktop 100.

As an example, in the coil assembly 1000, a pair of first coil modules 1001 and one second coil module 1003 may be arranged along the first direction. In this case, the pair of first coil modules 1001 may be disposed to be spaced apart from each other along the first direction. And one second coil module 1003 may be disposed between the pair of first coil modules 1001.

For example, similarly to the control panel 130, one second coil module 1003 may be disposed at the first direction center of the coil assembly 1000. One second coil module 1003 and the control panel 130 may be disposed on the same straight line in the second direction.

In this regard, the number of working coils WC included in each first coil module 1001 and the number of working coils WC included in each second coil module 1003 may be eight and six, respectively (see FIG. 8), or six and four, respectively (see FIG. 11).

As another example, in the coil assembly 1000a as shown in FIG. 10, two pairs of first coil modules 1001a and a pair of second coil modules 1003a may be arranged along the first direction. In this case, a pair of first coil modules 1001a may be disposed on one side of the pair of second coil modules 1003a in the first direction, and the other pair of first coil modules 1001a may be disposed on the other side of the pair of second coil modules 1003a in the first direction.

In this regard, the number of working coils WC included in each first coil module 1001a and the number of working coils WC included in each second coil module 1003a may be four and three, respectively (see FIG. 10), or three and two, respectively (see FIG. 12).

As another example, in the coil assembly 1000d, as shown in FIG. 13, a pair of first coil modules 1001d and a pair of second coil modules 1003d may be disposed to be spaced apart along the first direction. And a pair of second coil modules 1003d may be disposed between the pair of first coil modules 1001d.

As another example, in the coil assembly 1000e as shown in FIG. 14, two pairs of first coil modules 1001e and two pairs of second coil modules 1003e may be arranged along the first direction. In this case, a pair of first coil modules 1001e may be disposed on one side of the two pairs of second coil modules 1003e in the first direction, and the other pair of first coil modules 1001e may be disposed on the other side of the two pairs of second coil modules 1003e in the first direction.

Additionally, as shown in FIG. 15, only a pair of first coil modules 1001 f may be arranged along the first direction, or as shown in FIG. 16, only two pairs of first coil modules 1001g may be arranged along the first direction.

[Structure of working coil]

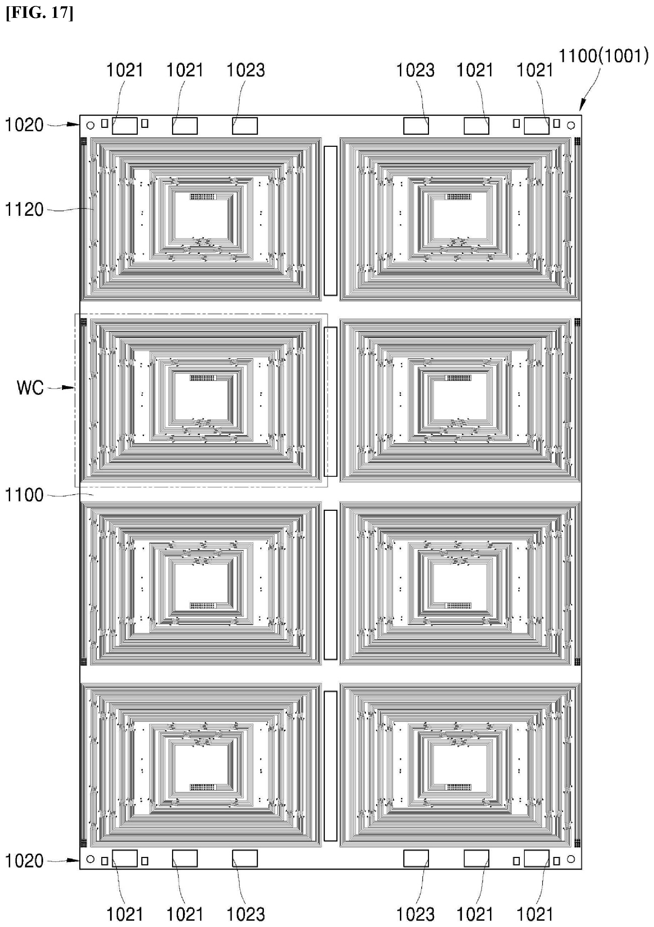

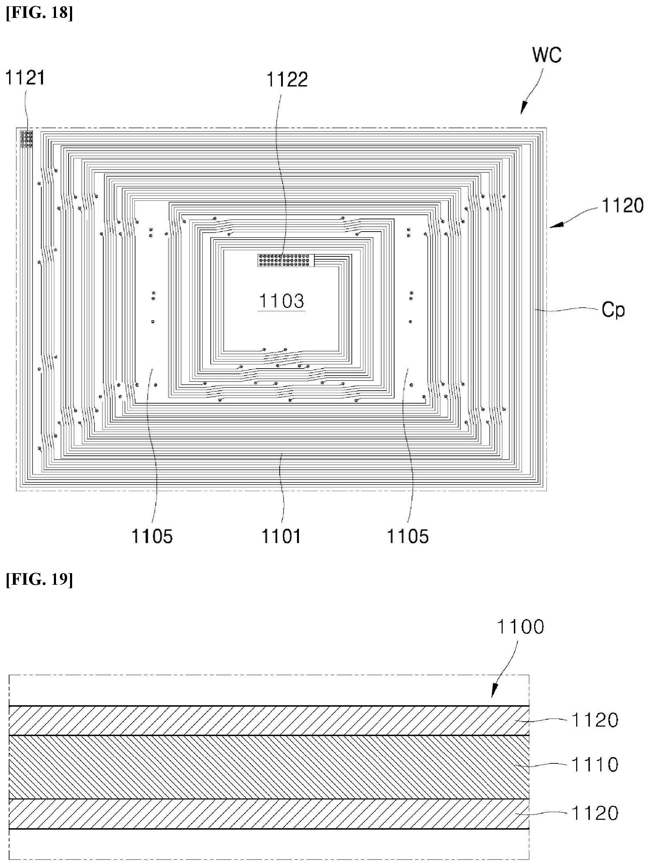

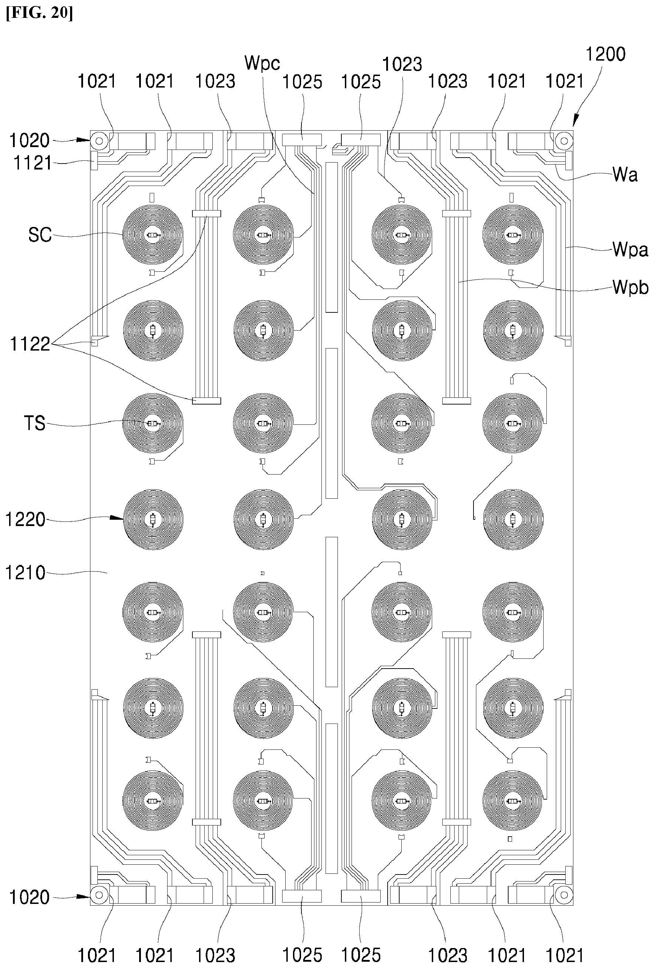

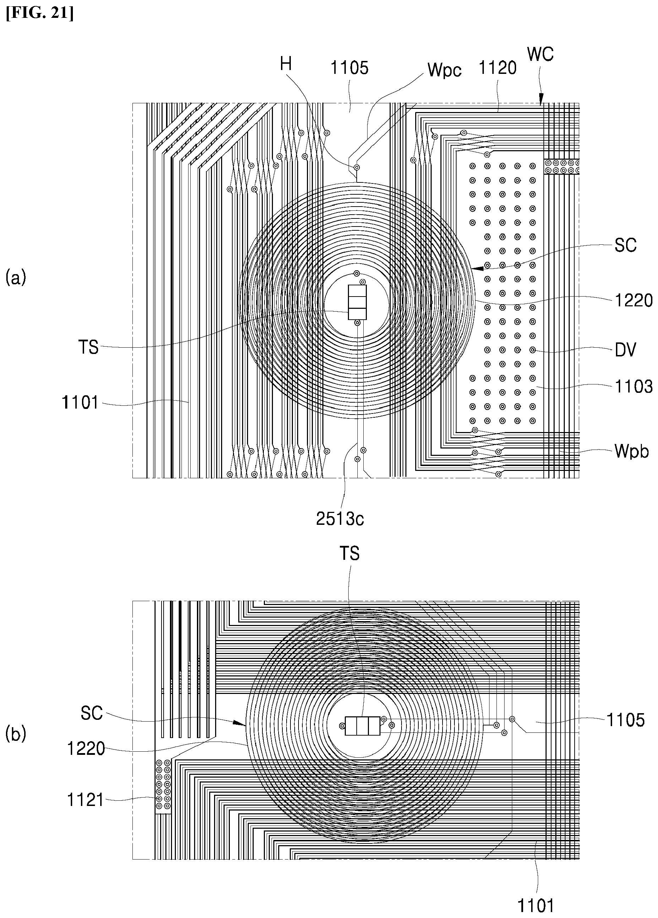

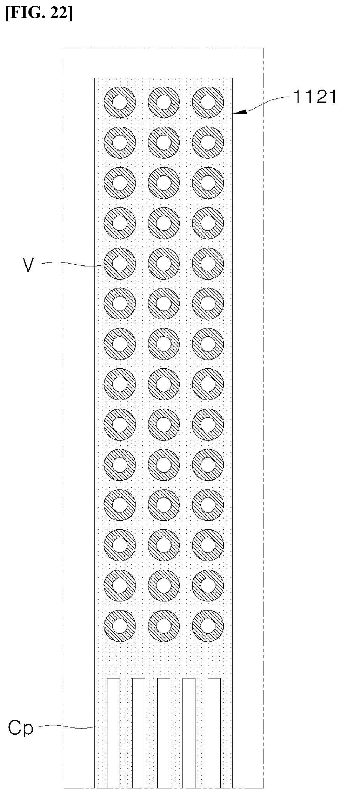

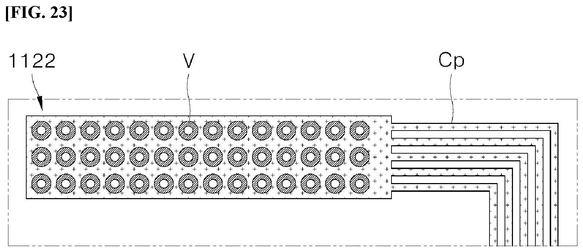

FIG. 17 is a plan view showing an example of a first coil substrate portion according to an embodiment; FIG. 18 is an enlarged view illustrating a portion of the first coil substrate portion shown in FIG. 17; and FIG. 19 is a cross-sectional view schematically showing a stacked structure of a first coil portion shown in FIG. 18. Also, FIG. 20 is a plan view showing an example of the layout structure of a sensing coil, and FIG. 21 shows an example of a layout structure of a sensing coil with respect to a working coil. Also, FIG. 22 is an enlarged view of a first terminal shown in FIG. 18, and FIG. 23 is an enlarged view of a second terminal shown in FIG. 18.

The working coil WC shown in FIGS. 8, 17 to 19 may be formed of conductors, more specifically, electrical conductors, stacked in a plurality of layers. Hereinafter, the first coil portion 1120, more specifically, a coil pattern Cp to be described later, is illustrated as being formed of a conductor.

The working coil WC may be formed as a result of connecting, in the up and down directions, the first coil portions 1120 to each other, which are respectively provided to the plurality of first coil substrate portions 1100 stacked in the up and down directions. Each of the first coil substrate portions 1100 may include a core 1110 and a first coil portion 1120.

The core 1110 may form a frame of the first coil substrate portion 1100, and may be formed of insulating material. As an example, the core 1110 may be formed of prepreg material. Hereinafter, the core 1110 is illustrated as being formed of a thermoset prepreg, and more specifically, a prepreg that is FR4.

The first coil portions 1120 may be disposed at both sides of the core 1110 in the up and down directions, respectively. For example, each first coil substrate portion 1100 may be provided in a form in which the first coil portions 1120 are formed on both sides of the core 1110 in the up and down directions, respectively, as a layer.

As an example, the first coil portions 1120 may be provided in a form patterned on both sides of the core 1110 in the up and down directions. For example, the first coil substrate portion 1100 may be formed by a copper clad laminate including a core 1110 and copper foils stacked on both sides of the core 1110 in the up and down directions. In this case, the first coil portion 1120 may be formed as a result of patterning the foil stacked on the core 1110 into a coil shape.

In an embodiment, the working coil WC may be formed in a shape including a polygonal shape. For example, the horizontal direction outer shape of the working coil WC (hereinafter, referred to as "outer shape of the working coil") may be a polygonal shape.

Additionally, as described above, the working coil WC may be formed by a plurality of first coil substrate portions 1100 stacked in the up and down directions. The first coil substrate portion 1100 may include a pattern region 1101 and a non-patterned region 1103, 1105.

The pattern region 1101 corresponds to a region of the first coil substrate portion 1100, in which the first coil portion 1120 is disposed. Additionally, the non-patterned region 1103, 1105 correspond to a region of the first coil substrate portion 1100, in which the first coil portion 1120 is not disposed. The pattern region 1101 and the non-patterned region 1103, 1105 may be disposed on the same plane, and may be arranged in the horizontal direction.

The non-patterned region 1103, 1105 may include a first non-patterned region 1103. In each of the working coils WC, the first non-patterned region 1103 may be disposed at the horizontal direction center. Additionally, the first non-patterned region 1103 may be disposed at the horizontal direction center of the first coil substrate portion 1100.

For example, the first non-patterned region 1103 may be disposed at the horizontal direction center of each of the working coil WC and the first coil substrate portion 1100. The pattern region 1101 may be disposed to surround the first non-patterned region 1103 in the outside in the horizontal direction.

In the present embodiment, the expression "center" does not mean the exact center, but means an area surrounded by a spirally wound working coil WC and including the center of the working coil WC in the diameter direction and its surroundings.

At least a portion of the first coil portion 1120 may surround the non-patterned region 1103, 1105 in the outside in the horizontal direction. As an example, at least a portion of the first coil portion 1120 may surround the first non-patterned region 1103 in the outside in the horizontal direction.

The first coil portion 1120 may include at least one coil pattern Cp disposed at the outer side of the first non-patterned region 1103 in the horizontal direction. In each of the first coil portions 1120, each coil pattern Cp may be wound multiple times around the first non-patterned region 1103. The first coil portion 1120 may be formed by at least one coil pattern Cp provided in this form.

Each of the first coil portions 1120 may include a plurality of coil patterns Cp. In this regard, in each of the first coil portions 1120, a plurality of coil patterns Cp may be disposed to be spaced apart from each other by a predetermined interval along the diameter direction of the working coil WC.

For example, each of the first coil portions 1120 may include three to six coil patterns Cp, respectively. However, the present invention is not limited to this, and each of the coil portions 112 may include a number of coil patterns Cp exceeding six, respectively.

In the present embodiment, each of the first coil portions 1120 is illustrated as including three to six coil patterns Cp, respectively. According to this, in each of the first coil portions 1120, three to six coil patterns Cp may be arranged along the diameter direction of the working coil WC. The coil pattern Cp disposed at each of the first coil portions 1120 may be connected in the up and down directions to any one of the coil patterns Cp disposed at the other first coil portions 1120 adjacent in the up and down directions.

Additionally, the first coil substrate portion 1100 may further include a second non-patterned region 1105. Like the first non-patterned region 1103, the second non-patterned region 1105 corresponds to a region in which the first coil portion 1120 is not formed.

With respect to the horizontal direction, the second non-patterned region 1105 may be disposed at the outer side of the first non-patterned region 1103. In the present embodiment, the second non-patterned region 1105 is illustrated as being disposed at the first direction outer side of the first non-patterned region 1103.

Additionally, in each of the first coil substrate portions 1100, the first non-patterned region 1103 and the second non-patterned region 1105 are not connected in the horizontal direction. With respect to the horizontal direction, at least a portion of the sensing coil SC may be disposed between the first non-patterned region 1103 and the second non-patterned region 1105. That is, between the first non-patterned region 1103 and the second non-patterned region 1105, at least a portion of the first coil portion 1120 may be disposed.

In an embodiment, a plurality of second non-patterned regions 1105 may be arranged in the first direction for each working coil WC. As an example, a pair of second non-patterned regions 1105 may be disposed for each working coil WC. The pair of second non-patterned regions 1105 may be disposed at the first direction outer side of the first non-patterned region 1103. That is, with respect to the first direction, the first non-patterned region 1103 may be disposed between the pair of second non-patterned regions 1105.

Additionally, in an embodiment, a plurality of working coils WC may be arranged along the first direction. The plurality of second non-patterned regions 1105 provided to the plurality of working coils WC disposed at this way may be disposed at equal intervals along the first direction.

Meanwhile, as shown in FIGS. 6 to 7, the second coil substrate portion 1200 may be disposed at the upper side or lower side of the first coil substrate portion 1100. The sensing coil SC may be formed by the second coil substrate portion 1200. The sensing coil SC may be disposed at the upper side or lower side of the first coil substrate portion 1100. The sensing coil SC may be disposed at a region overlapping the first coil substrate portion 1100 in the up and down directions.

As shown in FIGS. 6, 7, 20, and 21, in each of the coil modules 1001, 1003, the sensing coil SC may be disposed at the outer side of the working coil WC in the vertical direction. For example, in each of the coil modules 1001, 1003, the sensing coil SC and the working coil WC may be arranged in the up and down directions.

With respect to the horizontal direction, at least a portion of the sensing coil SC may be disposed at the second non-patterned region 1105. Accordingly, as a plurality of second non-pattern regions 1105 are disposed at equal intervals along the first direction, a plurality of sensing coils SC can be disposed at equal intervals along the first direction.

As described above, as a plurality of second non-pattern regions 1105 are disposed at equal intervals along the first direction, a plurality of sensing coils SC can be disposed at equal intervals along the first direction. In an embodiment, at least a portion of each sensing coil SC may be disposed at the second non-patterned region 1105. Accordingly, when a plurality of second non-pattern regions 1105 are disposed at equal intervals along the first direction, a plurality of sensing coils SC can be disposed at equal intervals along the first direction.

In an embodiment, the temperature sensor TS may be disposed at the horizontal direction inner side of the sensing coil SC. With respect to the horizontal direction, at least a portion of the temperature sensor TS may be disposed at the second non-patterned region 1105.

As an example, the temperature sensor TS may be disposed at the second non-patterned region 1105. That is, the temperature sensor TS installed on the second coil substrate portion 1200 and the second non-patterned region 1105 formed on the first coil substrate portion 1100 may be disposed to overlap each other in the up and down directions.

To this end, each sensing coil SC may be disposed at a position where the entire temperature sensor TS can be disposed at the second non-patterned area 1105, that is, a position where the entire temperature sensor TS can overlap the second non-patterned area 1105 in the up and down directions.

As shown in FIGS. 17, 18, 22, and 23, each first coil portion 1120 may include a fourth terminal 1121 and a fifth terminal 1122, respectively. The fourth terminal 1121 and the fifth terminal 1122 may connect a plurality of coil patterns Cp arranged in the horizontal direction, that is, a plurality of coil patterns Cp forming one first coil portion 1120.

With respect to the horizontal direction, the fourth terminal 1121 may be disposed at the outer side of the first non-patterned area 1103 and the fifth terminal 1122, and at least a portion of the fifth terminal 1122 may be disposed to be in contact with the first non-patterned area 1103. According to this, with respect to the horizontal direction, the second non-patterned region 1105 may be disposed between the fourth terminal 1121 and the fifth terminal 1122.

Additionally, based on the second non-patterned area 1105, the fourth terminal 1121 may be disposed at the horizontal direction outer side area of the first coil portion 1120, and the fifth terminal 1122 may be disposed at the horizontal direction inner side area of the first coil portion 1120.

As an example, the fourth terminal 1121 may be disposed at the horizontal direction outermost side of the first coil portion 1120, and the fifth terminal 1122 may be disposed at the horizontal direction innermost side of the first coil portion 1120. For example, the fourth terminal 1121 may be connected with the horizontal direction outermost end of the coil pattern Cp. And the fifth terminal 1122 may be connected with the innermost end of the coil pattern Cp.

Referring to FIGS. 6 and 20, the coil assembly 1000 according to an embodiment may further include a terminal part 1020.

The terminal part 1020 may be provided for connection between a power supply unit supplying power and the working coil WC.

With respect to the horizontal direction, the terminal part 1020 may be disposed at the outer side of an assembly of a plurality of working coils WC. The terminal part 1020 may be connected to at least one of the fourth terminal 1121 and the fifth terminal 1122.

The terminal part 1020 may include a first terminal 1021. The first terminal 1021 may be connected with the fourth terminal 1121. The first terminal 1021 may be connected with the working coil WC through the fourth terminal 1121.

The terminal part 1020 may include a second terminal 1023. The second terminal 1023 may be connected with the fifth terminal 1122. The second terminal 1023 may be connected with the working coil WC through the fifth terminal 1122.

The fourth terminal 1121 and the fifth terminal 1122 may be disposed at the first coil substrate portion 1100 and the first outer layer part 1300, respectively. That is, the fourth terminal 1121 and the fifth terminal 1122 may be formed in the same layer as the layer in which the first coil portion 1120 is formed.

In an embodiment, in each of the coil modules 1001, 1003, a plurality of working coils WC may be disposed at a matrix form. That is, a plurality of working coils WC may be arranged in the first direction, and a plurality of working coils WC may be arranged in the second direction.

As an example, each of the terminal parts 1020 may include a plurality of first terminals 1021 disposed at the first direction. Additionally, in each of the coil modules 1001, 1003, a plurality of working coils WC adjacent to each other in the second direction may be connected to each other so as to operate simultaneously. Therefore, each first terminal 1021 may be connected with one working coil WC. And the second terminal 1023 may be connected with a plurality of working coils WC adjacent to each other in the second direction.

For example, in a case where a plurality of working coils WC are arranged in 2 columns by 4 rows in each of the coil modules 1001, 1003, a pair of terminal parts 1020 may be provided to each of the coil modules 1001, 1003. The pair of terminal parts 1020 may be disposed to be spaced apart from each other in the first direction with an assembly of a plurality of working coils WC interposed therebetween. That is, any one of the pair of terminal parts 1020 may be disposed at the front side of the assembly of the plurality of working coils WC, and the other of the pair of terminal parts 1020 may be disposed at the rear side of the assembly of the plurality of working coils WC.

In each of the coil modules 1001, 1003, a plurality of working coils WC may be halved in the form of 2 columns by two rows, and each terminal part 1020 may be connected with the working coils WC in the form of 2 columns by 2 rows, respectively. For example, one of the pair of terminal parts 1020 disposed at the front side may be connected with four working coils WC disposed at the front side on the coil module 1001, 1003, and one of the pair of terminal parts 1020 disposed at the rear side may be connected with four working coils WC disposed at the rear side on the coil module 1001, 1003.

As described above, the fourth terminal 1121 may be connected with the horizontal direction outermost end of the working coil WC, and the fifth terminal 1122 may be connected with the innermost end of the working coil WC. As an example, each of the fourth terminals 1121 may be disposed at a position biased toward the terminal part 1020 with which it is to be connected.

That is, with respect to the second direction, each of the fourth terminals 1121 may be disposed closer to the end of the working coil WC than the center thereof, and at a position biased toward the terminal part 1020 with which it is to be connected. For example, the fourth terminals 1121 provided to the four working coils WC adjacent to the one of the pair of terminal parts 1020, which is disposed at the front side, may be disposed at positions biased to the front side on the working coils WC.

In an embodiment, each of the terminal parts 1020 may include a pair of first terminals 1021 arranged in the first direction. Each of the first terminals 1021 may be connected with only one working coil WC, respectively, by being connected with one fourth terminal 1121. Each first terminal 1021 may electrically connect each working coil WC with a power supply unit, for example, a driving circuit 300 and a load circuit 350.

The second terminal 1023 may connect the working coil WC with the ground terminal. The second terminal 1023 may be connected with a pair of fifth terminals 1122 adjacent to each other in the second direction. That is, the second terminal 1023 may connect a pair of working coils WC adjacent to each other in the second direction with the ground terminal.

As an example, the terminal part 1020 may be provided to each of the first coil substrate portion 1100, the second coil substrate portion 1200, and the outer layer parts 1300, 1350 which are stacked in the up and down directions. For example, the first terminal 1021 provided to each of the first coil substrate portion 1100, the second coil substrate portion 1200, the first outer layer part 1300, and the second outer layer part 1350 may be stacked in the up and down directions. The first terminals 1021 may be electrically connected to each other through a via.

The second terminal 1023 provided to each of the first coil substrate portion 1100, the second coil substrate portion 1200, the first outer layer part 1300, and the second outer layer part 1350 may be stacked in the up and down directions. The second terminals 1023 may be electrically connected to each other through a via.

As another example, the terminal part 1020 may be provided only to the second outer layer portion 1350. That is, the terminal part 1020 may be disposed only on the upper end of the coil module 1001, 1003.

Each of the coil modules 1001, 1003 may include a plurality of sensing coils SC, and the plurality of sensing coils SC may be disposed to be spaced apart from each other by a predetermined interval along the first direction. Additionally, similarly to the first coil substrate portion 1100, the second outer layer part 1350 and the second coil substrate portion 1200 may include a fourth terminal 1121 and a fifth terminal 1122, respectively. That is, the fourth terminal 1121 and the fifth terminal 1122 may also be formed in the same layer as the layer in which the second coil portion 1220 is formed.

Each terminal part 1020 may further include a third terminal 1025. The third terminal 1025 may connect the sensing coil SC with the power supply unit. The third terminal 1025 may be provided to the second outer layer portion 1350, and may also be provided to the second coil substrate portion 1200. The third terminal 1025 may be formed in the same layer as the sensing coil SC (e.g., the layer in which the second coil portion 1220 is formed).

[Layout structure of working coils for each coil module]

As shown in FIG. 8, in each of the coil modules 1001, 1003, a plurality of working coils WC may be arranged in the first direction. For example, in each of the coil modules 1001, 1003, a plurality of working coils WC may be arranged along the first direction, and may also be arranged in the second direction. That is, in each of the coil modules 1001, 1003, a plurality of working coils WC may be disposed at a matrix form.

In this case, each working coil WC may be disposed to be spaced apart from another working coil WC adjacent thereto in the first direction by a predetermined interval in the first direction, and may be disposed to be spaced apart from another working coil WC adjacent thereto in the second direction by a predetermined interval in the second direction.

In an embodiment, the length of the coil module 1001, 1003 in the first direction may be set to be shorter than the length of the coil module 1001, 1003 in the second direction. That is, each of the coil modules 1001, 1003 may be formed in a rectangular shape, wherein the rectangular shape may have the second direction length longer than the first direction length.

In contrast to this, the length of the working coil WC in the second direction may be set to be shorter than the length of the working coil WC in the first direction. That is, each of the working coils WC may be formed in a rectangular shape, wherein the rectangular shape may have the first direction length longer than the second direction length.

In each of the coil modules 1001, 1003, the number of working coils WC disposed on the same straight line in the second direction may be greater than the number of working coils WC disposed on the same straight line in the first direction.

In an embodiment, the first coil module 1001 may include a plurality of working coils WC arranged in A columns by B rows, and the second coil module 1003 may include a plurality of working coils WC arranged in A columns by C rows. In this embodiment, the column is defined as a line along the first direction, and the row is defined as a line along the second direction.

As an example, the relationship among A, B, and C may be defined as follows:

$$A \geq 1, C \geq 2, B > C,$$

For example, in the first coil module 1001 and the second coil module 1003, one or more working coils WC may be arranged in the first direction and two or more working coils WC may be arranged in the second direction. Additionally, in the first coil module 1001, one or more working coils WC may be arranged in the first direction, and three or more working coils WC may be arranged in the second direction.

According to this, the number of working coils WC disposed on the same straight line in the first direction in the first coil module 1001 and the number of working coils WC disposed on the same straight line in the first direction in the second coil module 1003 may be set to be equal to each other. Additionally, the number of working coils WC disposed on the same straight line in the second direction in the second coil module 1003 may be set to be less than the number of working coils WC disposed on the same straight line in the second direction in the first coil module 1001.

As an example, when n first coil modules 1001 are disposed to be spaced apart along the first direction, n/2 second coil modules 1003 may be disposed between a pair of first coil modules 1001 disposed at the first direction innermost side.

In this case, each of the first coil modules 1001 may include 16/n working coils WC arranged in the form of 4/n columns by 4 rows. And each of the second coil modules 1003 may include 12/n working coils WC arranged in the form of 4/n columns by 3 rows.

For example, when two first coil modules 1001 are disposed to be spaced apart along the first direction, one second coil module 1003 may be disposed between a pair of first coil modules 1001 disposed at the first direction innermost side. In this case, each of the first coil modules 1001 may include eight working coils WC arranged in the form of 2 columns by 4 rows.

And each of the second coil modules 1003 may include six working coils WC arranged in the form of 2 columns by 3 rows. In this case, the coil assembly 1000 may include a total of twenty-two working coils WC.

As described above, the cooktop 100 (see FIG. 3) may be provided with a plurality of indicator lamps L (see FIG. 3), and the indicator lamp L may be implemented by the lighting module 180 (see FIG. 4). The lighting module 180 may be disposed at the lower side of the coil assembly 1000, and the light emitted from the lighting module 180 may pass through the coil assembly 1000 to illuminate the light display area of the top plate 120.

In order to allow the light emitted from the lighting module 180 to be transmitted to the light display area of the top plate 120, each of the coil modules 1001, 1003 may be provided with a through hole h. In each of the coil modules 1001, 1003, the through hole h may penetrate the coil module 1001, 1003 in the up and down directions, and each through hole h may be disposed between one column of working coils WC and one column of working coils WC.

As illustrated in FIG. 10, if four first coil modules 1001a are disposed to be spaced apart to each other along the first direction, two second coil modules 1003a may be disposed between a pair of first coil modules 1001a disposed at the first direction innermost side. In this case, each of the first coil modules 1001 may include four working coils WC arranged in the form of 1 column by 4 rows.

In a case where the coil assembly 1000a is provided in the above-described form, a space may be formed between columns in the coil assembly 1000a. This space may be used as a passage for allowing the light emitted from the lighting module 180 to be transmitted to the light display area of the top plate 120.

That is, by providing each of the coil modules 1001a and 1003a in a form including only one column of working coils WC, the need for a separate through hole to be formed in the coil assembly 1000a becomes unnecessary.

Additionally, considering that its own size, or size of a display or a control panel may vary for each model, the coil assembly 1000a provided in the above-described form may be more advantageous for mass production than the coil assembly in the form illustrated in FIG. 8.

For example, according to the coil assembly 1000a provided in the above-described form, when producing several products with different sizes of the display or control panel, the first coil module 1001a can be used in common while only the size of the second coil module 1003a is changed depending on the size of the display or control panel.

Additionally, according to the coil assembly 1000a provided in the form described above, when necessary, it is enough only to repair or replace one column for each coil module 1001a, 1003a, so maintenance becomes easier and maintenance costs are reduced.

Additionally, if each coil module 1001a, 1003a is provided in the form including only one column of working coils WC as described above, the surface area of each coil module 1001a, 1003a can be relatively widened compared to the form in which each coil module includes two columns of working coils WC, and air can flow in each space between the coil modules 1001a, 1003a, thereby improving the heat dissipation performance of the coil assembly 1000a.

In comparison, in a case where two or more columns of working coils WC are disposed at each coil module 1001, 1003 as shown in FIG. 8, the number of coil modules 1001, 1003 to be assembled is reduced compared to when only one column of working coils WC is disposed at each coil module, so there is an advantage of reducing the assembly hour.

Additionally, in a case where two or more columns of working coils WC are disposed at each of the coil modules 1001, 1003, the space required to form wiring between the working coils WC of the two adjacent columns can be easily secured in the coil module 1001, 1003, so there is an advantage in that the wiring design can be performed easily and efficiently.

And each of the second coil modules 1003 may include three working coils WC arranged in the form of 1 column by 3 rows. Also in this case, the coil assembly 1000a may include a total of twenty-two working coils WC.

As a second example, as shown in FIG. 11, each of the first coil modules 1001b may include 12/n working coils WC arranged in the form of 4/n columns by 3 rows. And each of the second coil modules 1003b may include 8/n working coils WC arranged in the form of 4/n columns by 2 rows.

For example, when two first coil modules 1001b are disposed to be spaced apart along the first direction, one second coil module 1003b may be disposed between a pair of first coil modules 1001b disposed at the first direction innermost side. In this case, each of the first coil modules 1001b may include six working coils WC arranged in the form of 2 columns by 3 rows.

And each of the second coil modules 1003b may include four working coils WC arranged in the form of 2 columns by 2 rows. In this case, the coil assembly 1000b may include a total of sixteen working coils WC.

As illustrated in FIG. 12, if four first coil modules 1001c are disposed to be spaced apart to each other along the first direction, two second coil modules 1003c may be disposed between a pair of first coil modules 1001c disposed at the first direction innermost side.

In this case, each of the first coil modules 1001c may include three working coils WC arranged in the form of 1 column by 3 rows. And each of the second coil modules 1003c may include two working coils WC arranged in the form of 1 column by 2 rows. Also in this case, the coil assembly 1000c may include a total of sixteen working coils WC.

As a third example, as shown in FIG. 13, when two first coil modules 1001d are disposed to be spaced apart to each other along the first direction, two second coil modules 1003d may be disposed between a pair of first coil modules 1001d disposed at the first direction innermost side. In this case, each of the first coil modules 1001d may include ten working coils WC arranged in the form of 2 columns by 5 rows.

And each of the second coil modules 1003d may include six working coils WC arranged in the form of 2 columns by 3 rows. In this case, the coil assembly 1000d may include a total of thirty-two working coils WC.

As a fourth example, as shown in FIG. 14, if four first coil modules 1001e are disposed to be spaced apart to each other along the first direction, four second coil modules 1003e may be disposed between a pair of first coil modules 1001e disposed at the first direction innermost side. In this case, each of the first coil modules 1001e may include five working coils WC arranged in the form of 1 column by 5 rows.

And each of the second coil modules 1003e may include three working coils WC arranged in the form of 1 column by 3 rows. Also in this case, the coil assembly 1000e may include a total of thirty-two working coils WC.

As a fifth example, as shown in FIG. 15, when n first coil modules 1001f are disposed to be spaced apart from each other along the first direction, each first coil module 1001f may include 16/n working coils WC arranged in the form of 4/n columns by 4 rows.

For example, when two first coil modules 1001f are disposed to be spaced apart from each other along the first direction, each first coil module 1001f may include eight working coils WC arranged in the form of 2 columns by 4 rows. In this case, the coil assembly 1000f may include a total of sixteen working coils WC.

As illustrated in FIG. 16, if four first coil modules 1001g are disposed to be spaced apart from each other along the first direction, each first coil module 1001g may include four working coils WC arranged in the form of 1 column by 4 rows. Also in this case, the coil assembly 1000g may include a total of sixteen working coils WC.

In the above-described examples, the coil assembly may include working coils WC which all have the same size and shape. Alternatively, the coil assembly may include several kinds of working coils WC having different sizes and shapes.

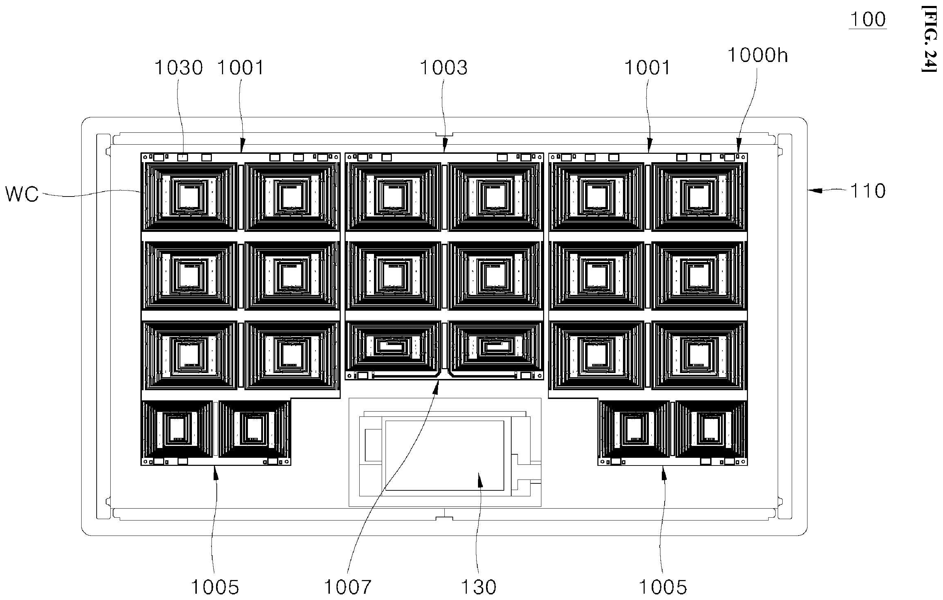

FIG. 24 is a plan view showing a seventh example of a layout structure of a first coil module and a second coil module.

As another example, the coil assembly 1000h as shown in FIG. 24 may further include at least one of the third coil module 1005 and the fourth coil module 1007. The first coil module 1001 and the third coil module 1005 may be disposed on the same straight line in the second direction, and the second coil module 1003 and the fourth coil module 1007 may be disposed on the same straight line in the second direction.

According to this, with respect to the first direction, a pair of first coil modules 1001 may be disposed to be spaced apart to each other along the first direction with the second coil module 1003 and the fourth coil module 1007 interposed therebetween.

Additionally, with respect to the second direction, the first coil module 1001 may protrude further to one side than the second coil module 1003; the third coil module 1005 may be disposed at a position more biased toward one side than the first coil module 1001; and the fourth coil module 1007 may be disposed at a position more biased toward one side than the second coil module 1003.

That is, the first coil module 1001 having the second direction length greater than that of the second coil module 1003 may protrude further to the front than the second coil module 1003; the third coil module 1005 may be disposed at a position more biased toward the front than the first coil module 1001; and the fourth coil module 1007 may be disposed at a position more biased toward the front than the second coil module 1003. Of course, the third coil module 1005 may be disposed at a position more biased toward the front than the fourth coil module 1007.

The third coil module 1005 and the fourth coil module 1007 may be formed to have horizontal direction sizes smaller than those of the first coil module 1001 and the second coil module 1003. To this end, the third coil module 1005 may include a working coil having the horizontal direction size smaller than that of the working coil provided to the first coil module 1001.

As described above, the control panel 130 may be disposed at a position more biased toward the front than the second coil module 1003, and a pair of first coil modules 1001 may be disposed to be spaced apart from each other along the first direction with the control panel 130 interposed therebetween. Additionally, a pair of third coil modules 1005 disposed at the front side of the pair of first coil modules 1001 may also be disposed to be spaced apart to each other along the first direction with the control panel 130 interposed therebetween.

With respect to the first direction, the length of the third coil module 1005 may be set to be shorter than the length of the first coil module 1001. And with respect to the second direction, the length of the third coil module 1005 may be set to be shorter than the length of the first coil module 1001. That is, the third coil module 1005 may be formed to have the first direction length and the second direction length which are shorter than those of the first coil module 1001.

Additionally, the fourth coil module 1007 may be disposed at the rear side of the control panel 130. With respect to the second direction, the fourth coil module 1007 may be disposed between the control panel 130 and the second coil module 1003, and the length of the fourth coil module 1007 may be formed to be shorter than the length of the second coil module 1003.

As the third coil module 1005 and the fourth coil module 1007 are disposed at the above-described form, it is possible to secure a wider area for the area in which the control panel 130 is to be disposed. According to this, the control panel 130 can be further spaced apart from the coil modules 1001, 1003 in the horizontal direction, and thereby, the control panel 130 can be less affected by the heat generated around the working coil WC.

[Examples of coil module]

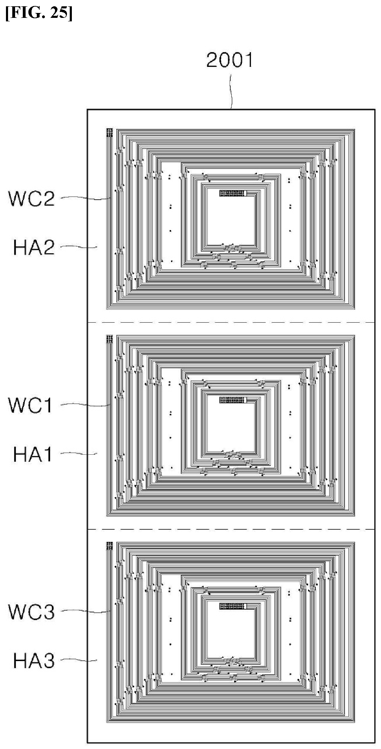

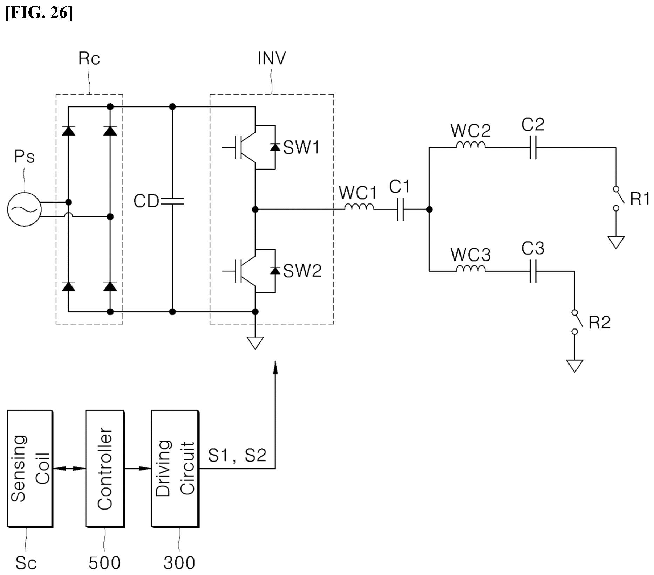

FIG. 25 is a plan view showing a structure of a coil module according to a first embodiment. FIG. 26 is a circuit diagram of a home appliance including a coil module according to a first embodiment.

Referring to FIG. 25, the coil module 2001 according to a first embodiment may include three heating areas HA1, HA2, HA3 and three working coils WC1, WC2, WC3 disposed at positions corresponding to the heating areas HA1, HA2, HA3, respectively.

Each of the heating areas HA1, HA2, HA3 and each of the working coils WC1, WC2, WC3 may be disposed at a line along one direction (e.g., up and down directions). The first heating area HA1 may be disposed between the second heating area HA2 and the third heating area HA3. Although not shown, at least one sensing coil for container detection may be disposed at each of the heating areas HA1, HA2, HA3.

Referring to FIGS. 25 and 26, the home appliance according to a first embodiment may include a rectifier circuit Rc, a DC link capacitor CD, an inverter INV, a sensing coil SC, a controller 500, a driving circuit 300, three working coils WC1, WC2, WC3 disposed at positions corresponding to three heating areas HA1, HA2, HA3, a first relay R1, and a second relay R2.

The rectifier circuit Rc may rectify an input voltage supplied from an external power source Ps and output the rectified voltage. The rectifier circuit Rc may be a circuit including a plurality of diodes (e.g., bridge circuit).

The DC link capacitor CD may smooth the voltage output from the rectifier circuit Rc, and output the smoothed voltage.

The inverter INV may output an alternating current with the use of the voltage output from the DC link capacitor CD. In an embodiment, the inverter INV may include a first switching element SW1 and a second switching element SW2. The first switching element SW1 and the second switching element SW2 may be turned on and turned off by a first switching signal S1 and a second switching signal S2 supplied by the driving circuit 300. The first switching element SW1 and the second switching element SW2 may be alternately turned on and turned off. In another embodiment, the inverter INV may include two or more switching elements.

The controller 500 may supply a control signal to the driving circuit 300. When the control signal is supplied to the driving circuit 300, the driving circuit 300 may output the switching signal S1, S2. When the first switching signal S1 and the second switching signal S2 are supplied to the inverter INV, the first switching element SW1 and the second switching element SW2 may be alternately turned on and turned off. Thereby, from the inverter INV an alternating current can be output. When the alternating current output from the inverter INV is supplied to the working coil WC1, WC2, WC3, the container provided on the top of the working coil WC1, WC2, WC3 can be heated.

One end of the first working coil WC1 may be connected with the inverter INV. To the other end of the first working coil WC1, a first resonance capacitor C1 may be connected.

One end of the second working coil WC2 may be connected with the first working coil WC1 and the first resonance capacitor C1. To the other end of the second working coil WC2, a second resonance capacitor C2 may be connected. The first relay R1 may be connected between the ground terminal and a group consisting of the second working coil WC2 and the second resonance capacitor C2.

One end of the third working coil WC3 may be connected with the first working coil WC1 and the first resonance capacitor C1. To the other end of the third working coil WC3, a third resonance capacitor C3 may be connected. The second relay R2 may be connected between the ground terminal and a group consisting of the third working coil WC3 and the third resonance capacitor C3.

The first working coil WC1 and the second working coil WC2 may be connected with each other in series. The first working coil WC1 and the third working coil WC3 may be connected with each other in series. The second working coil WC2 and the third working coil WC3 may be connected with each other in parallel.

The controller 500 may determine whether a container is present on each heating area HA1, HA2, HA3 by performing container detection on each heating area HA1, HA2, HA3 with the use of at least one sensing coil SC disposed at the coil module 2001. The controller 500 may control the opening and closing states of the first relay R1 and the second relay R2 according to the result of the container detection.

When it is determined that the container is present in the first heating area HA1 or the second heating area HA2, the controller 500 may control the first relay R1 to be closed and the second relay R2 to be opened.

When it is determined that the container is present in the first heating area HA1 and the second heating area HA2, the controller 500 may control the first relay R1 to be closed and the second relay R2 to be opened.

When it is determined that the container is present in the first heating area HA1 or the third heating area HA3, the controller 500 may control the second relay R2 to be closed and the first relay R1 to be opened.

When it is determined that the container is present in the first heating area HA1 and the third heating area HA3, the controller 500 may control the second relay R2 to be closed and the first relay R1 to be opened.

When it is determined that the container is present in the first heating area HA1, the second heating area HA2, and the third heating area HA3, the controller 500 may control the first relay R1 and the second relay R2 to be closed.

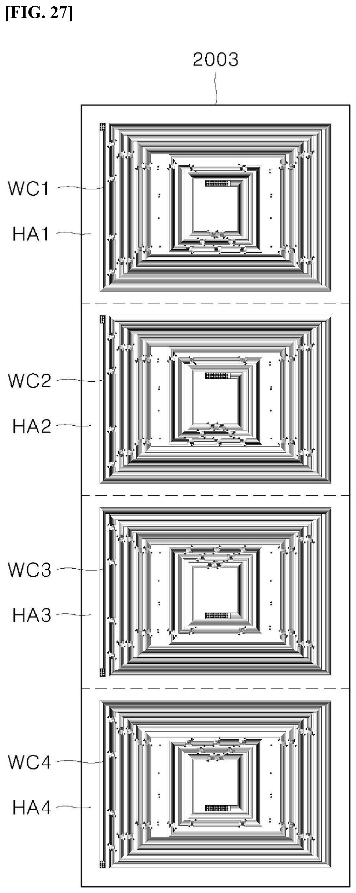

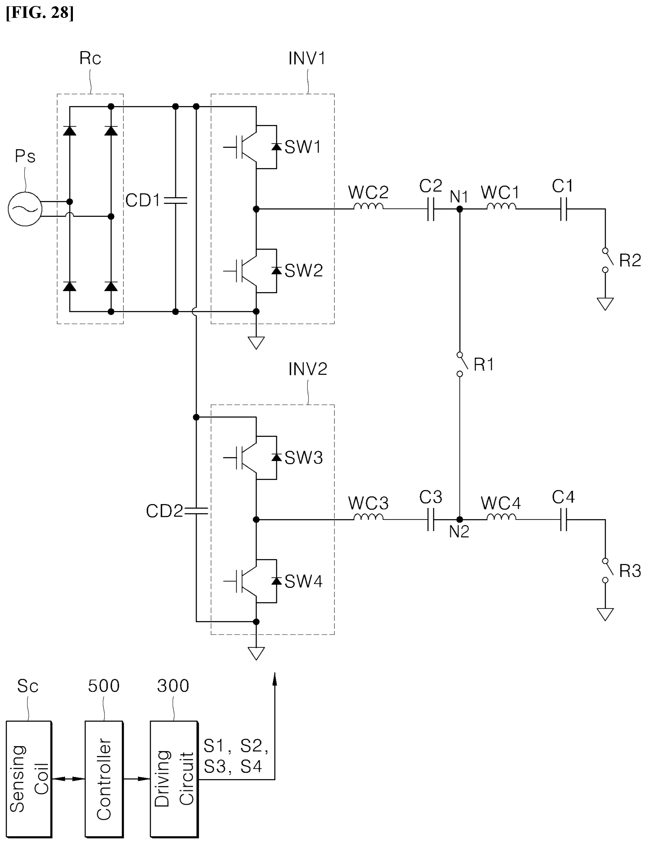

FIG. 27 is a plan view showing a structure of a coil module according to a second embodiment. FIG. 28 is a circuit diagram of a home appliance including a coil module according to a second embodiment.

Referring to FIG. 27, the coil module 2003 according to a second embodiment may include four heating areas HA1, HA2, HA3, HA4 and four working coils WC1, WC2, WC3, WC4 disposed at positions corresponding to the heating areas HA1, HA2, HA3, HA4, respectively.

Each of the heating areas HA1, HA2, HA3, HA4 and each of the working coils WC1, WC2, WC3, WC4 may be disposed at a line along one direction (e.g., up and down directions). The second heating area HA2 may be disposed between the first heating area HA1 and the third heating area HA3. The third heating area HA3 may be disposed between the second heating area HA2 and the fourth heating area HA4. The second heating area HA2 and the third heating area HA3 may be disposed between the first heating area HA1 and the fourth heating area HA4. Although not shown, at least one sensing coil for container detection may be disposed at each of the heating areas HA1, HA2, HA3, HA4.

Referring to FIGS. 27 and 28, the home appliance according to a second embodiment may include a rectifier circuit Rc, a first DC link capacitor CD1, a first inverter INV1, a second DC link capacitor CD2, a second inverter INV2, a sensing coil SC, a controller 500, a driving circuit 300, four working coils WC1, WC2, WC3, WC4 disposed at positions corresponding to four heating areas HA1, HA2, HA3, HA4, a first relay R1, a second relay R2, and a third relay R3.

The rectifier circuit Rc may rectify an input voltage supplied from an external power source Ps and output the rectified voltage. The rectifier circuit Rc may be a circuit including a plurality of diodes (e.g., bridge circuit).

The first DC link capacitor CD1 may smooth the voltage output from the rectifier circuit Rc, and output the smoothed voltage.

The first inverter INV1 may output an alternating current with the use of the voltage output from the first DC link capacitor CD1. In an embodiment, the first inverter INV1 may include a first switching element SW1 and a second switching element SW2. The first switching element SW1 and the second switching element SW2 may be turned on and turned off by a first switching signal S1 and a second switching signal S2 supplied by the driving circuit 300. The first switching element SW1 and the second switching element SW2 may be alternately turned on and turned off. In another embodiment, the first inverter INV1 may include two or more switching elements.

The second DC link capacitor CD2 may smooth the voltage output from the rectifier circuit Rc, and output the smoothed voltage.

The second inverter INV2 may output an alternating current with the use of the voltage output from the second DC link capacitor CD2. In an embodiment, the second inverter INV2 may include a third switching element SW3 and a fourth switching element SW4. The third switching element SW3 and the fourth switching element SW4 may be turned on and turned off by a third switching signal S3 and a fourth switching signal S4 supplied by the driving circuit 300. The third switching element SW3 and the fourth switching element SW4 may be alternately turned on and turned off. In another embodiment, the second inverter INV2 may include two or more switching elements.

The controller 500 may supply a control signal to the driving circuit 300. When the control signal is supplied to the driving circuit 300, the driving circuit 300 may output the switching signal S1, S2, S3, S4.

When the first switching signal S1 and the second switching signal S2 are supplied to the first inverter INV1, the first switching element SW1 and the second switching element SW2 may be alternately turned on and turned off. Thereby, from the first inverter INV1 an alternating current can be output. When the alternating current output from the first inverter INV1 is supplied to the working coil WC1, WC2, the container provided on the top of the working coil WC1, WC2 can be heated.

When the third switching signal S3 and the fourth switching signal S4 are supplied to the second inverter INV2, the third switching element SW3 and the fourth switching element SW4 may be alternately turned on and turned off. Thereby, from the second inverter INV2 an alternating current can be output. When the alternating current output from the second inverter INV2 is supplied to the working coil WC3, WC4, the container provided on the top of the working coil WC3, WC4 can be heated.

In another embodiment, the first switching element SW1 and the fourth switching element SW4 may be turned on and turned off alternately with the second switching element SW2 and the third switching element SW3. For example, when the first switching element SW1 and the fourth switching element SW4 are turned off (turned on), the second switching element SW2 and the third switching element SW3 may be turned on (turned off).

One end of the second working coil WC2 may be connected with the first inverter INV1. To the other end of the second working coil WC2, a second resonance capacitor C2 may be connected.

One end of the first working coil WC1 may be connected with the second working coil WC2 and the second resonance capacitor C2. To the other end of the first working coil WC1, a first resonance capacitor C1 may be connected. The second relay R2 may be connected between the ground terminal and a group consisting of the third working coil WC3 and the third resonance capacitor C3.

The first working coil WC1 and the second working coil WC2 may be connected with each other in series.

One end of the third working coil WC3 may be connected with the second inverter INV2. To the other end of the third working coil WC3, a third resonance capacitor C3 may be connected.

One end of the fourth working coil WC4 may be connected with the third working coil WC3 and the third resonance capacitor C3. To the other end of the fourth working coil WC4, a fourth resonance capacitor C4 may be connected. The third relay R3 may be connected between the ground terminal and a group consisting of the fourth working coil WC4 and the fourth resonance capacitor C4.

The first relay R1 may be connected between a first connection node N1, which is a node where the first working coil WC1 and the second working coil WC2 are connected with each other, and a second connection node N2, which is a node where the third working coil WC3 and the fourth working coil WC4 are connected with each other.

The third working coil WC3 and the fourth working coil WC4 may be connected with each other in series.

The controller 500 may determine whether a container is present on each heating area HA1, HA2, HA3, HA4 by performing container detection on each heating area HA1, HA2, HA3, HA4 with the use of at least one sensing coil SC disposed at the coil module 2001. The controller 500 may control the opening and closing states of the first relay R1, the second relay R2, and the third relay R3 according to the result of the container detection.

When it is determined that the container is present in the first heating area HA1 or the second heating area, the controller 500 may control the second relay R2 to be closed and the first relay R1 and the third relay R3 to be opened.

When it is determined that the container is present in the first heating area HA1 and the second heating area, the controller 500 may control the second relay R2 to be closed and the first relay R1 and the third relay R3 to be opened.

When it is determined that the container is present in the second heating area HA2 and the third heating area HA3, the controller 500 may control the first relay R1 to be closed and the second relay R2 and the third relay R3 to be opened.

When it is determined that the container is present in the third heating area HA3 or the fourth heating area HA4, the controller 500 may control the third relay R3 to be closed and the first relay R1 and the second relay R2 to be opened.

When it is determined that the container is present in the third heating area HA3 and the fourth heating area HA4, the controller 500 may control the third relay R3 to be closed and the first relay R1 and the second relay R2 to be opened.

When it is determined that the container is present in the first heating area HA1, the second heating area HA2, and the third heating area HA3, the controller 500 may control the first relay R1 and the second relay R2 to be closed and the third relay R3 to be opened.

When it is determined that the container is present in the second heating area HA2, the third heating area HA3, and the fourth heating area HA4, the controller 500 may control the first relay R1 and the third relay R3 to be closed and the second relay R2 to be opened.

When it is determined that the container is present in the first heating area HA1, the second heating area HA2, the third heating area HA3, and the fourth heating area HA4, the controller 500 may control the second relay R2 and the third relay R3 to be closed and the first relay R1 to be opened.

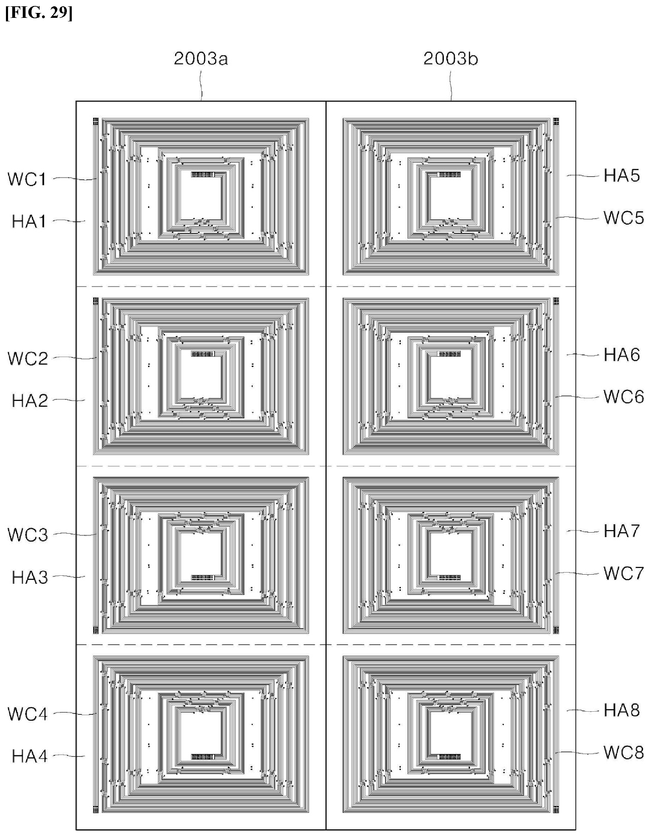

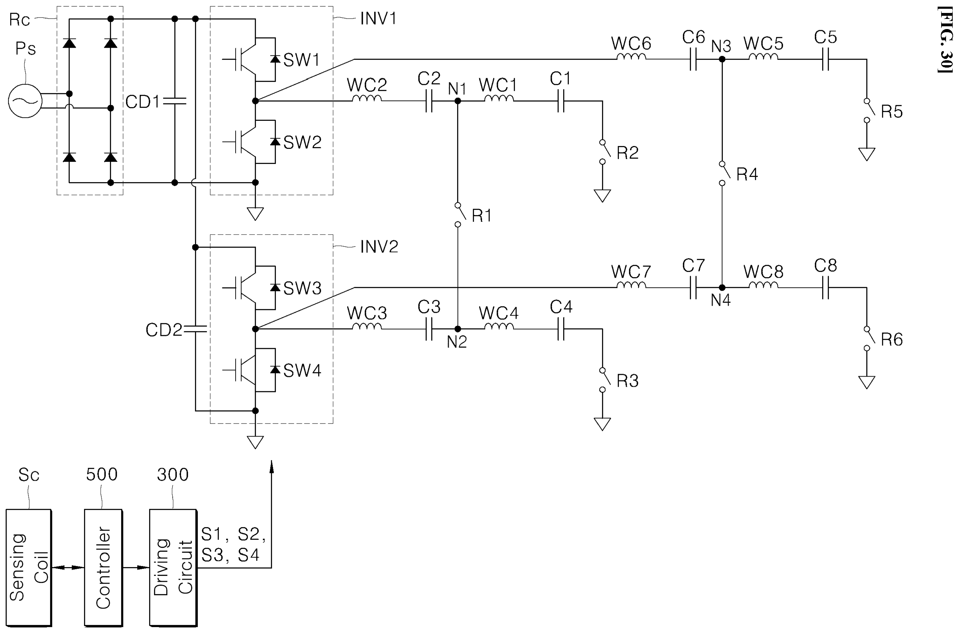

FIG. 29 is a plan view showing a structure of a coil module according to a third embodiment. FIG. 30 is a circuit diagram of a home appliance including a coil module according to a third embodiment.

Referring to FIG. 29, the coil module according to a third embodiment may include a first coil module 2003a and a second coil module 2003b disposed at a line along one direction (e.g., left and right directions) with the first coil module 2003a.

The first coil module 2003a may include four heating areas HA1, HA2, HA3, HA4 and four working coils WC1, WC2, WC3, WC4 disposed at positions corresponding to the heating areas HA1, HA2, HA3, HA4, respectively.

Each of the heating areas HA1, HA2, HA3, HA4 and each of the working coils WC1, WC2, WC3, WC4 may be disposed at a line along one direction (e.g., up and down directions). The second heating area HA2 may be disposed between the first heating area HA1 and the third heating area HA3. The third heating area HA3 may be disposed between the second heating area HA2 and the fourth heating area HA4. The second heating area HA2 and the third heating area HA3 may be disposed between the first heating area HA1 and the fourth heating area HA4. Although not shown, at least one sensing coil for container detection may be disposed at each of the heating areas HA1, HA2, HA3, HA4.

The first coil module 2003b may include four heating areas HA5, HA6, HA7, HAS and four working coils WC5, WC6, WC7, WC8 disposed at positions corresponding to the heating areas HA5, HA6, HA7, HA8, respectively.

Each of the heating areas HA5, HA6, HA7, HA8 and each of the working coils WC5, WC6, WC7, WC8 may be disposed at a line along one direction (e.g., up and down directions). The sixth heating area HA6 may be disposed between the fifth heating area HA5 and the seventh heating area HA7. The seventh heating area HA7 may be disposed between the sixth heating area HA6 and the eighth heating area HA8. The sixth heating area HA6 and the seventh heating area HA7 may be disposed between the fifth heating area HA5 and the eighth heating area HA8. Although not shown, at least one sensing coil for container detection may be disposed at each of the heating areas HA5, HA6, HA7, HA8.

The first heating area HA1 may be disposed adjacent to the fifth heating area HA5. The second heating area HA2 may be disposed adjacent to the sixth heating area HA6. The third heating area HA3 may be disposed adjacent to the seventh heating area HA7. The fourth heating area HA4 may be disposed adjacent to the eighth heating area HA8.

Referring to FIGS. 29 and 30, the home appliance according to a third embodiment may include a rectifier circuit Rc, a first DC link capacitor CD1, a first inverter INV1, a second DC link capacitor CD2, a second inverter INV2, a sensing coil SC, a controller 500, a driving circuit 300, eight working coils WC1, WC2, WC3, WC4, WC5, WC6, WC7, WC8 disposed at positions corresponding to eight heating areas HA1, HA2, HA3, HA4, HA5, HA6, HA7, HA8, a first relay R1, a second relay R2, a third relay R3, a fourth relay R4, a fifth relay R5, and a sixth relay R6.

The rectifier circuit Rc may rectify an input voltage supplied from an external power source Ps and output the rectified voltage. The rectifier circuit Rc may be a circuit including a plurality of diodes (e.g., bridge circuit).

The first DC link capacitor CD1 may smooth the voltage output from the rectifier circuit Rc, and output the smoothed voltage.

The first inverter INV1 may output an alternating current with the use of the voltage output from the first DC link capacitor CD1. In an embodiment, the first inverter INV1 may include a first switching element SW1 and a second switching element SW2. The first switching element SW1 and the second switching element SW2 may be turned on and turned off by a first switching signal S1 and a second switching signal S2 supplied by the driving circuit 300. The first switching element SW1 and the second switching element SW2 may be alternately turned on and turned off. In another embodiment, the first inverter INV1 may include two or more switching elements.

The second DC link capacitor CD2 may smooth the voltage output from the rectifier circuit Rc, and output the smoothed voltage.

The second inverter INV2 may output an alternating current with the use of the voltage output from the second DC link capacitor CD2. In an embodiment, the second inverter INV2 may include a third switching element SW3 and a fourth switching element SW4. The third switching element SW3 and the fourth switching element SW4 may be turned on and turned off by a third switching signal S3 and a fourth switching signal S4 supplied by the driving circuit 300. The third switching element SW3 and the fourth switching element SW4 may be alternately turned on and turned off. In another embodiment, the second inverter INV2 may include two or more switching elements.

The controller 500 may supply a control signal to the driving circuit 300. When the control signal is supplied to the driving circuit 300, the driving circuit 300 may output the switching signal S1, S2, S3, S4.

When the first switching signal S1 and the second switching signal S2 are supplied to the first inverter INV1, the first switching element SW1 and the second switching element SW2 may be alternately turned on and turned off. Thereby, from the first inverter INV1 an alternating current can be output. When the alternating current output from the first inverter INV1 is supplied to the working coil WC1, WC2, WC5, WC6, the container provided on the top of the working coil WC1, WC2, WC5, WC6 can be heated.

When the third switching signal S3 and the fourth switching signal S4 are supplied to the second inverter INV2, the third switching element SW3 and the fourth switching element SW4 may be alternately turned on and turned off. Thereby, from the second inverter INV2 an alternating current can be output. When the alternating current output from the first inverter INV2 is supplied to the working coil WC3, WC4, WC7, WC8, the container provided on the top of the working coil WC3, WC4, WC7, WC8 can be heated.

In another embodiment, the first switching element SW1 and the fourth switching element SW4 may be turned on and turned off alternately with the second switching element SW2 and the third switching element SW3. For example, when the first switching element SW1 and the fourth switching element SW4 are turned off (turned on), the second switching element SW2 and the third switching element SW3 may be turned on (turned off).

One end of the second working coil WC2 may be connected with the first inverter INV1. To the other end of the second working coil WC2, a second resonance capacitor C2 may be connected.

One end of the first working coil WC1 may be connected with the second working coil WC2 and the second resonance capacitor C2. To the other end of the first working coil WC1, a first resonance capacitor C1 may be connected. The second relay R2 may be connected between the ground terminal and a group consisting of the third working coil WC3 and the third resonance capacitor C3.

The first working coil WC1 and the second working coil WC2 may be connected with each other in series.

One end of the third working coil WC3 may be connected with the second inverter INV2. To the other end of the third working coil WC3, a third resonance capacitor C3 may be connected.

One end of the fourth working coil WC4 may be connected with the third working coil WC3 and the third resonance capacitor C3. To the other end of the fourth working coil WC4, a fourth resonance capacitor C4 may be connected. The third relay R3 may be connected between the ground terminal and a group consisting of the fourth working coil WC4 and the fourth resonance capacitor C4.

The third working coil WC3 and the fourth working coil WC4 may be connected with each other in series.

The first relay R1 may be connected between a first connection node N1, which is a node where the first working coil WC1 and the second working coil WC2 are connected with each other, and a second connection node N2, which is a node where the third working coil WC3 and the fourth working coil WC4 are connected with each other.

One end of the sixth working coil WC6 may be connected with the first inverter INV1. To the other end of the sixth working coil WC6, a sixth resonance capacitor C6 may be connected.

One end of the fifth working coil WC5 may be connected with the sixth working coil WC6 and the sixth resonance capacitor C6. To the other end of the fifth working coil WC5, a fifth resonance capacitor C5 may be connected. The fifth relay R5 may be connected between the ground terminal and a group consisting of the fifth working coil WC5 and the fifth resonance capacitor C5.

The fifth working coil WC5 and the sixth working coil WC6 may be connected with each other in series.

One end of the seventh working coil WC7 may be connected with the second inverter INV2. To the other end of the seventh working coil WC7, a seventh resonance capacitor C7 may be connected.

One end of the eighth working coil WC8 may be connected with the seventh working coil WC7 and the seventh resonance capacitor C7. To the other end of the eighth working coil WC8, an eighth resonance capacitor C8 may be connected. The sixth relay R6 may be connected between the ground terminal and a group consisting of the eighth working coil WC8 and the eighth resonance capacitor C8.

The seventh working coil WC7 and the eighth working coil WC8 may be connected with each other in series.

The fourth relay R4 may be connected between a third connection node N3, which is a node where the fifth working coil WC5 and the sixth working coil WC6 are connected with each other, and a fourth connection node N2, which is a node where the seventh working coil WC7 and the eighth working coil WC8 are connected with each other.

The controller 500 may determine whether a container is present on each heating area HA1, HA2, HA3, HA4, HA5, HA6, HA7, HA8 by performing container detection on each heating area HA1, HA2, HA3, HA4, HA5, HA6, HA7, HA8 with the use of at least one sensing coil SC disposed at the coil module 2003a, 2003b. The controller 500 may control the opening and closing states of the first relay R1, the second relay R2, the third relay R3, the fourth relay R4, the fifth relay R5, and the sixth relay R6 according to the result of the container detection.

When it is determined that the container is present in the first heating area HA1, the second heating area HA2, the fifth heating area HA5, and the sixth heating area HA6, the controller 500 may control the second relay R2 and the fifth relay R5 to be closed and the first relay R1, the third relay R3, the fourth relay R4, and the sixth relay R6 to be opened.

When it is determined that the container is present in the second heating area HA2, the third heating area HA3, the sixth heating area HA6, and the seventh heating area HA7, the controller 500 may control the first relay R1 and the fourth relay R4 to be closed and the second relay R2, the third relay R3, the fifth relay R5, and the sixth relay R6 to be opened.

When it is determined that the container is present in the third heating area HA3, the fourth heating area HA4, the seventh heating area HA7, and the eighth heating area HA8, the controller 500 may control the third relay R3 and the sixth relay R6 to be closed and the first relay R1, the second relay R2, the fourth relay R4, and the fifth relay R5 to be opened.

When it is determined that the container is present in the first heating area HA1, the second heating area HA2, the third heating area HA3, the fifth heating area HA5, the sixth heating area HA6, and the seventh heating area HA7, the controller 500 may control the first relay R1, the second relay R2, the fourth relay R4, and the fifth relay R5 to be closed and the third relay R3 and the sixth relay R6 to be opened.

When it is determined that the container is present in the second heating area HA2, the third heating area HA3, the fourth heating area HA4, the sixth heating area HA6, the seventh heating area HA7, and the eighth heating area HA8, the controller 500 may control the first relay R1, the third relay R3, the fourth relay R4, and the sixth relay R6 to be closed and the second relay R2 and the fifth relay R5 to be opened.

When it is determined that the container is present in the first heating area HA1, the second heating area HA2, the third heating area HA3, the fourth heating area HA4, the fifth heating area HA5, the sixth heating area HA6, the seventh heating area HA7, and the eighth heating area HA8, the controller 500 may control the second relay R2, the third relay R3, the fifth relay R5, and the sixth relay R6 to be closed and the first relay R1 and the fourth relay R4 to be opened.

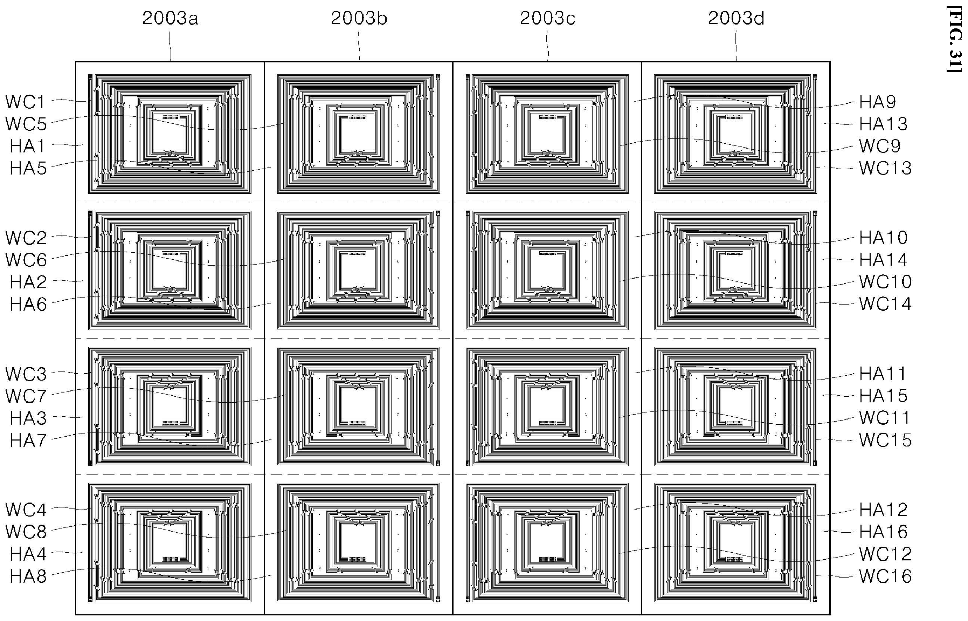

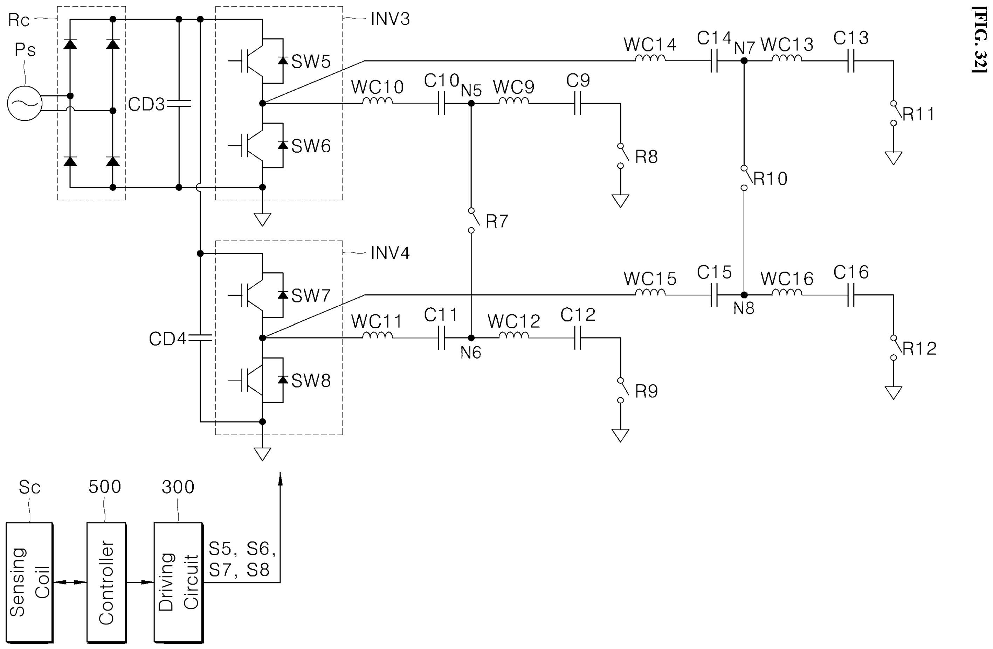

FIG. 31 is a plan view showing a structure of a coil module according to a fourth embodiment. FIG. 32 is a circuit diagram of a home appliance including a coil module according to a fourth embodiment.

Referring to FIG. 31, the coil module according to a fourth embodiment may include a first coil module 2003a, a second coil module 2003b disposed at a line along one direction (e.g., left and right directions) with the first coil module 2003a, a third coil module 2003c disposed at a line along one direction (e.g., left and right directions) with the second coil module 2003b, and a fourth coil module 2003d disposed at a line along one direction (e.g., left and right directions) with the third coil module 2003c.

The first coil module 2003a may include four heating areas HA1, HA2, HA3, HA4 and four working coils WC1, WC2, WC3, WC4 disposed at positions corresponding to the heating areas HA1, HA2, HA3, HA4, respectively.

Each of the heating areas HA1, HA2, HA3, HA4 and each of the working coils WC1, WC2, WC3, WC4 may be disposed at a line along one direction (e.g., up and down directions). The second heating area HA2 may be disposed between the first heating area HA1 and the third heating area HA3. The third heating area HA3 may be disposed between the second heating area HA2 and the fourth heating area HA4. The second heating area HA2 and the third heating area HA3 may be disposed between the first heating area HA1 and the fourth heating area HA4. Although not shown, at least one sensing coil for container detection may be disposed at each of the heating areas HA1, HA2, HA3, HA4.

The first coil module 2003b may include four heating areas HA5, HA6, HA7, HA8 and four working coils WC5, WC6, WC7, WC8 disposed at positions corresponding to the heating areas HA5, HA6, HA7, HA8, respectively.

Each of the heating areas HA5, HA6, HA7, HA8 and each of the working coils WC5, WC6, WC7, WC8 may be disposed at a line along one direction (e.g., up and down directions). The sixth heating area HA6 may be disposed between the fifth heating area HA5 and the seventh heating area HA7. The seventh heating area HA7 may be disposed between the sixth heating area HA6 and the eighth heating area HA8. The sixth heating area HA6 and the seventh heating area HA7 may be disposed between the fifth heating area HA5 and the eighth heating area HA8. Although not shown, at least one sensing coil for container detection may be disposed at each of the heating areas HA5, HA6, HA7, HA8.

The first heating area HA1 may be disposed adjacent to the fifth heating area HA5. The second heating area HA2 may be disposed adjacent to the sixth heating area HA6. The third heating area HA3 may be disposed adjacent to the seventh heating area HA7. The fourth heating area HA4 may be disposed adjacent to the eighth heating area HA8.

The third coil module 2003c may include four heating areas HA9, HA10, HA11, HA12 and four working coils WC9, WC10, WC11, WC12 disposed at positions corresponding to the heating areas HA9, HA10, HA11, HA12, respectively.

Each of the heating areas HA9, HA10, HA11, HA12 and each of the working coils WC9, WC10, WC11, WC12 may be disposed at a line along one direction (e.g., up and down directions). The tenth heating area HA10 may be disposed between the ninth heating area HA9 and the eleventh heating area HA11. The eleventh heating area HA11 may be disposed between the tenth heating area HA10 and the twelfth heating area HA12. The tenth heating area HA10 and the eleventh heating area HA11 may be disposed between the ninth heating area HA9 and the twelfth heating area HA12. Although not shown, at least one sensing coil for container detection may be disposed at each of the heating areas HA9, HA10, HA11, HA12.

The fifth heating area HA5 may be disposed adjacent to the ninth heating area HA9. The sixth heating area HA6 may be disposed adjacent to the tenth heating area HA10. The seventh heating area HA7 may be disposed adjacent to the eleventh heating area HA11. The eighth heating area HA8 may be disposed adjacent to the twelfth heating area HA12.

The fourth coil module 2003d may include four heating areas HA13, HA14, HA15, HA16 and four working coils WC13, WC14, WC15, WC16 disposed at positions corresponding to the heating areas HA13, HA14, HA15, HA16, respectively.

Each of the heating areas HA13, HA14, HA15, HA16 and each of the working coils WC13, WC14, WC15, WC16 may be disposed at a line along one direction (e.g., up and down directions). The fourteenth heating area HA14 may be disposed between the thirteenth heating area HA13 and the fifteenth heating area HA15. The fifteenth heating area HA15 may be disposed between the fourteenth heating area HA14 and the sixteenth heating area HA16. The fourteenth heating area HA14 and the fifteenth heating area HA15 may be disposed between the thirteenth heating area HA13 and the sixteenth heating area HA16. Although not shown, at least one sensing coil for container detection may be disposed at each of the heating areas HA13, HA14, HA15, HA16.

The ninth heating area HA9 may be disposed adjacent to the thirteenth heating area HA13. The tenth heating area HA10 may be disposed adjacent to the fourteenth heating area HA14. The eleventh heating area HA11 may be disposed adjacent to the fifteenth heating area HA15. The twelfth heating area HA12 may be disposed adjacent to the sixteenth heating area HA16.

Referring to FIGS. 30 and 31, the first coil module 2003a and the second coil module 2003b included in the home appliance according to a fourth embodiment may be implemented in the same manner as the circuit diagram shown in FIG. 30. In other words, the home appliance according to a fourth embodiment may include a rectifier circuit Rc, a first DC link capacitor CD1, a first inverter INV1, a second DC link capacitor CD2, a second inverter INV2, a sensing coil SC, a controller 500, a driving circuit 300, eight working coils WC1, WC2, WC3, WC4, WC5, WC6, WC7, WC8 disposed at positions corresponding to eight heating areas HA1, HA2, HA3, HA4, HA5, HA6, HA7, HA8, a first relay R1, a second relay R2, a third relay R3, a fourth relay R4, a fifth relay R5, and a sixth relay R6.

Referring to FIGS. 31 and 32, the home appliance according to a fourth embodiment may further include a third DC link capacitor CD3, a third inverter INV3, a fourth DC link capacitor CD4, a fourth inverter INV4, eight working coils WC9, WC10, WC11, WC12, WC13, WC14, WC15, WC16 disposed at positions corresponding to eight heating areas HA9, HA10, HA11, HA12, HA13, HA14, HA15, HA16, a seventh relay R7, an eighth relay R8, a ninth relay R9, a tenth relay R10, a eleventh relay R11, and a twelfth relay R12.

The third DC link capacitor CD3 may smooth the voltage output from the rectifier circuit Rc, and output the smoothed voltage.

The third inverter INV3 may output an alternating current with the use of the voltage output from the third DC link capacitor CD3. In an embodiment, the third inverter INV3 may include a fifth switching element SW5 and a sixth switching element SW6. The fifth switching element SW5 and the sixth switching element SW6 may be turned on and turned off by a fifth switching signal S5 and a sixth switching signal S6 supplied by the driving circuit 300. The fifth switching element SW5 and the sixth switching element SW6 may be alternately turned on and turned off. In another embodiment, the third inverter INV3 may include two or more switching elements.

The fourth DC link capacitor CD4 may smooth the voltage output from the rectifier circuit Rc, and output the smoothed voltage.

The fourth inverter INV4 may output an alternating current with the use of the voltage output from the fourth DC link capacitor CD4. In an embodiment, the fourth inverter INV4 may include a seventh switching element SW7 and an eighth switching element SW8. The seventh switching element SW7 and the eighth switching element SW8 may be turned on and turned off by a seventh switching signal S7 and an eighth switching signal S8 supplied by the driving circuit 300. The seventh switching element SW7 and the eighth switching element SW8 may be alternately turned on and turned off. In another embodiment, the fourth inverter INV4 may include two or more switching elements.

The controller 500 may supply a control signal to the driving circuit 300. When the control signal is supplied to the driving circuit 300, the driving circuit 300 may output the switching signal S5, S6, S7, S8.

When the fifth switching signal S5 and the sixth switching signal S6 are supplied to the third inverter INV3, the fifth switching element SW5 and the sixth switching element SW6 may be alternately turned on and turned off. Thereby, from the third inverter INV3 an alternating current can be output. When the alternating current output from the third inverter INV3 is supplied to the working coil WC9, WC10, WC13, WC14, the container provided on the top of the working coil WC9, WC10, WC13, WC14 can be heated.

When the seventh switching signal S7 and the eighth switching signal S8 are supplied to the fourth inverter INV4, the seventh switching element SW7 and the eighth switching element SW8 may be alternately turned on and turned off. Thereby, from the fourth inverter INV4 an alternating current can be output. When the alternating current output from the fourth inverter INV4 is supplied to the working coil WC11, WC12, WC15, WC16, the container provided on the top of the working coil WC11, WC12, WC15, WC16 can be heated.

In another embodiment, the fifth switching element SW5 and the eighth switching element SW8 may be turned on and turned off alternately with the sixth switching element SW6 and the seventh switching element SW7. For example, when the fifth switching element SW5 and the eighth switching element SW8 are turned off (turned on), the sixth switching element SW6 and the seventh switching element SW7 may be turned on (turned off).

One end of the tenth working coil WC10 may be connected with the third inverter INV3. To the other end of the tenth working coil WC10, a tenth resonance capacitor C10 may be connected.

One end of the ninth working coil WC9 may be connected with the tenth working coil WC10 and the tenth resonance capacitor C10. To the other end of the ninth working coil WC9, a ninth resonance capacitor C9 may be connected. The eighth relay R8 may be connected between the ground terminal and a group consisting of the ninth working coil WC9 and the ninth resonance capacitor C9.

The ninth working coil WC9 and the tenth working coil WC10 may be connected with each other in series.

One end of the eleventh working coil WC11 may be connected with the fourth inverter INV4. To the other end of the eleventh working coil WC11, an eleventh resonance capacitor C11 may be connected.

One end of the twelfth working coil WC12 may be connected with the eleventh working coil WC11 and the eleventh resonance capacitor C11. To the other end of the twelfth working coil WC12, a twelfth resonance capacitor C12 may be connected. The ninth relay R9 may be connected between the ground terminal and a group consisting of the twelfth working coil WC12 and the twelfth resonance capacitor C12.

The eleventh working coil WC11 and the twelfth working coil WC12 may be connected with each other in series.

The seventh relay R7 may be connected between a fifth connection node N5, which is a node where the ninth working coil WC9 and the tenth working coil WC10 are connected with each other, and a sixth connection node N6, which is a node where the eleventh working coil WC11 and the twelfth working coil WC12 are connected with each other.

One end of the fourteenth working coil WC14 may be connected with the third inverter INV3. To the other end of the fourteenth working coil WC14, a fourteenth resonance capacitor C14 may be connected.

One end of the thirteenth working coil WC13 may be connected with the fourteenth working coil WC14 and the fourteenth resonance capacitor C14. To the other end of the thirteenth working coil WC13, a thirteenth resonance capacitor C13 may be connected. The eleventh relay R11 may be connected between the ground terminal and a group consisting of the thirteenth working coil WC13 and the thirteenth resonance capacitor C13.

The thirteenth working coil WC13 and the fourteenth working coil WC14 may be connected with each other in series.

One end of the fifteenth working coil WC15 may be connected with the fourth inverter INV4. To the other end of the fifteenth working coil WC15, a fifteenth resonance capacitor C15 may be connected.

One end of the sixteenth working coil WC16 may be connected with the fifteenth working coil WC15 and the fifteenth resonance capacitor C15. To the other end of the sixteenth working coil WC16, a sixteenth resonance capacitor C16 may be connected. The twelfth relay R12 may be connected between the ground terminal and a group consisting of the sixteenth working coil WC16 and the sixteenth resonance capacitor C16.

The fifteenth working coil WC15 and the sixteenth working coil WC16 may be connected with each other in series.

The tenth relay R10 may be connected between a seventh connection node N7, which is a node where the thirteenth working coil WC13 and the fourteenth working coil WC14 are connected with each other, and an eighth connection node N8, which is a node where the fifteenth working coil WC15 and the sixteenth working coil WC16 are connected with each other.

The controller 500 may determine whether a container is present on each heating area HA1, HA2, HA3, HA4, HA5, HA6, HA7, HA8, HA9, HA10, HA11, HA12, HA13, HA14, HA15, HA16 by performing container detection on each heating area HA1, HA2, HA3, HA4, HA5, HA6, HA7, HA8, HA9, HA10, HA11, HA12, HA13, HA14, HA15, HA16 with the use of at least one sensing coil SC disposed at the coil module2003a, 2003b, 2003c, 2003d. The controller 500 may control the opening and closing states of the first relay R1, the second relay R2, the third relay R3, the fourth relay R4, the fifth relay R5, the sixth relay R6, the seventh relay R7, the eighth relay R8, the ninth relay R9, the tenth relay R10, the eleventh relay R11, and the twelfth relay R12 according to the result of the container detection.

When it is determined that the container is present in the first heating area HA1, the second heating area HA2, the fifth heating area HA5, and the sixth heating area HA6, the controller 500 may control the second relay R2 and the fifth relay R5 to be closed and the first relay R1, the third relay R3, the fourth relay R4, the sixth relay R6, the seventh relay R7, the eighth relay R8, the ninth relay R9, the tenth relay R10, the eleventh relay R11, and the twelfth relay R12 to be opened.

When it is determined that the container is present in the second heating area HA2, the third heating area HA3, the sixth heating area HA6, and the seventh heating area HA7, the controller 500 may control the first relay R1 and the fourth relay R4 to be closed and the second relay R2, the third relay R3, the fifth relay R5, the sixth relay R6, the seventh relay R7, the eighth relay R8, the ninth relay R9, the tenth relay R10, the eleventh relay R11, and the twelfth relay R12 to be opened.

When it is determined that the container is present in the third heating area HA3, the fourth heating area HA4, the seventh heating area HA7, and the eighth heating area HA8, the controller 500 may control the third relay R3 and the sixth relay R6 to be closed and the first relay R1, the second relay R2, the fourth relay R4, the fifth relay R5, the seventh relay R7, the eighth relay R8, the ninth relay R9, the tenth relay R10, the eleventh relay R11, and the twelfth relay R12 to be opened.

When it is determined that the container is present in the first heating area HA1, the second heating area HA2, the third heating area HA3, the fifth heating area HA5, the sixth heating area HA6, and the seventh heating area HA7, the controller 500 may control the first relay R1, the second relay R2, the fourth relay R4, and the fifth relay R5 to be closed and the third relay R3, the sixth relay R6, the seventh relay R7, the eighth relay R8, the ninth relay R9, the tenth relay R10, the eleventh relay R11, and the twelfth relay R12 to be opened.

When it is determined that the container is present in the second heating area HA2, the third heating area HA3, the fourth heating area HA4, the sixth heating area HA6, the seventh heating area HA7, and the eighth heating area HA8, the controller 500 may control the first relay R1, the third relay R3, the fourth relay R4, and the sixth relay R6 to be closed and the second relay R2, the fifth relay R5, the seventh relay R7, the eighth relay R8, the ninth relay R9, the tenth relay R10, the eleventh relay R11, and the twelfth relay R12 to be opened.

When it is determined that the container is present in the first heating area HA1, the second heating area HA2, the third heating area HA3, the fourth heating area HA4, the fifth heating area HA5, the sixth heating area HA6, the seventh heating area HA7, and the eighth heating area HA8, the controller 500 may control the second relay R2, the third relay R3, the fifth relay R5, and the sixth relay R6 to be closed and the first relay R1, the fourth relay R4, the seventh relay R7, the eighth relay R8, the ninth relay R9, the tenth relay R10, the eleventh relay R11, and the twelfth relay R12 to be opened.

When it is determined that the container is present in the fifth heating area HA5, the sixth heating area HA6, the ninth heating area HA9, and the tenth heating area HA10, the controller 500 may control the fifth relay R5 and the eighth relay R8 to be closed and the first relay R1, the second relay R2, the third relay R3, the fourth relay R4, the sixth relay R6, the seventh relay R7, the ninth relay R9, the tenth relay R10, the eleventh relay R11 and the twelfth relay R12 to be opened.

When it is determined that the container is present in the sixth heating area HA6, the seventh heating area HA7, the tenth heating area HA10, and the eleventh heating area HA11, the controller 500 may control the fourth relay R4 and the seventh relay R7 to be closed and the first relay R1, the second relay R2, the third relay R3, the fifth relay R5, the sixth relay R6, , the eighth relay R8, the ninth relay R9, the tenth relay R10, the eleventh relay R11, and the twelfth relay R12 to be opened.

When it is determined that the container is present in the seventh heating area HA7, the eighth heating area HA8, the eleventh heating area HA11, and the twelfth heating area HA12, the controller 500 may control the sixth relay R6 and the ninth relay R9 to be closed and the first relay R1, the second relay R2, the third relay R3, the fourth relay R4, the fifth relay R5, the seventh relay R7, the eighth relay R8, the tenth relay R10, the eleventh relay R11, and the twelfth relay R12 to be opened.

When it is determined that the container is present in the fifth heating area HA5, the sixth heating area HA6, the seventh heating area HA7, the ninth heating area HA9, the tenth heating area HA10, and the eleventh heating area HA11, the controller 500 may control the fourth relay R4, the fifth relay R5, the seventh relay R7, and the eighth relay R8 to be closed and the first relay R1, the second relay R2, the third relay R3, the sixth relay R6, the ninth relay R9, the tenth relay R10, the eleventh relay R11 and the twelfth relay R12 to be opened.

When it is determined that the container is present in the sixth heating area HA6, the seventh heating area HA7, the eighth heating area HA8, the tenth heating area HA10, the eleventh heating area HA11, and the twelfth heating area HA12, the controller 500 may control the fourth relay R4, the sixth relay R6, the seventh relay R7, and the ninth relay R9 to be closed and the first relay R1, the second relay R2, the third relay R3, the fifth relay R5, the eighth relay R8, the tenth relay R10, the eleventh relay R11, and the twelfth relay R12 to be opened.

When it is determined that the container is present in the fifth heating area HA5, the sixth heating area HA6, the seventh heating area HA7, the eighth heating area HA8, the ninth heating area HA9, the tenth heating area HA10, the eleventh heating area HA11, and the twelfth heating area HA12, the controller 500 may control the fifth relay R5, the sixth relay R6, the eighth relay R8, and the ninth relay R9 to be closed and the first relay R1, the second relay R2, the third relay R3, the fourth relay R4, the seventh relay R7, the tenth relay R10, the eleventh relay R11, and the twelfth relay R12 to be opened.

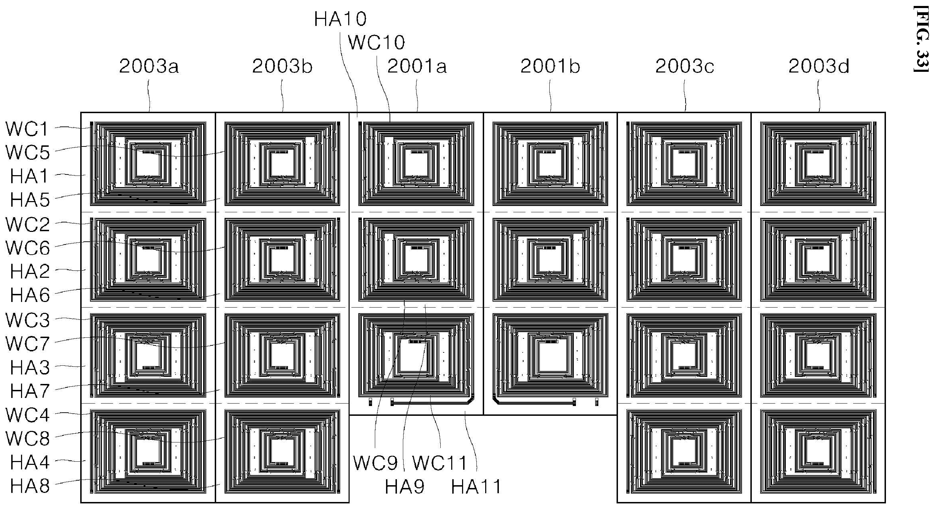

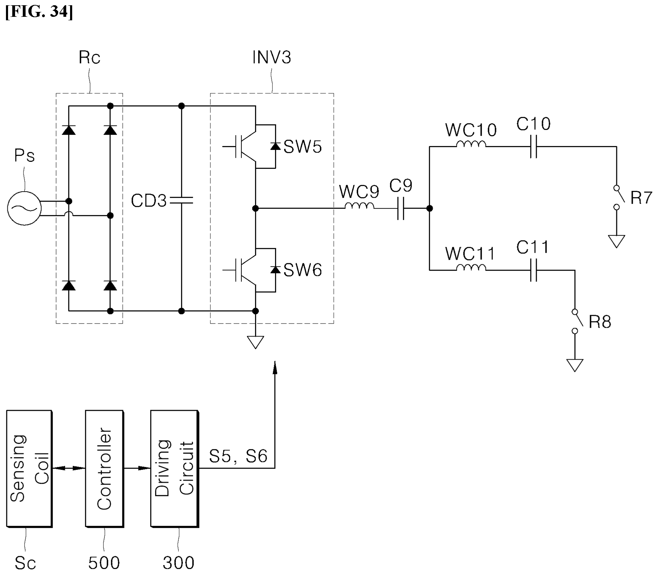

FIG. 33 is a plan view showing a structure of a coil module according to a fifth embodiment. FIG. 34 is a circuit diagram of a home appliance including a coil module according to a fifth embodiment.

Referring to FIG. 33, the coil module according to a fifth embodiment may include a first coil module 2003a, a second coil module 2003b disposed at a line along one direction (e.g., left and right directions) with the first coil module 2003a, a third coil module 2001a disposed at a line along one direction (e.g., left and right directions) with the second coil module 2003b, a fourth coil module 2001b disposed at a line along one direction (e.g., left and right directions) with the third coil module 2001a, a fifth coil module 2003c disposed at a line along one direction (e.g., left and right directions) with the fourth coil module 2001b, and a sixth coil module 2003d disposed at a line along one direction (e.g., left and right directions) with the fifth coil module 2003c.

The fourth coil module 2001b, the fifth coil module 2003c, and the sixth coil module 2003d have a symmetrical structure with respect to the first coil module 2003a, the second coil module 2003b, and the third coil module 2001a based on the center line between the third coil module 2001a and the fourth coil module 2001b. Additionally, the circuit configuration of the fourth coil module 2001b, the fifth coil module 2003c, and the sixth coil module 2003d is the same as that of the first coil module 2003a, the second coil module 2003b, and the third coil module 2001a.

Hereinafter, the circuit configuration and operation of the first coil module 2003a, the second coil module 2003b, and the third coil module 2001a will be described, but the circuit configuration and operation of the first coil module 2003a, the second coil module 2003b, and the third coil module 2001a can also be equally applied to the fourth coil module 2001b, the fifth coil module 2003c, and the sixth coil module 2003d.

The first coil module 2003a may include four heating areas HA1, HA2, HA3, HA4 and four working coils WC1, WC2, WC3, WC4 disposed at positions corresponding to the heating areas HA1, HA2, HA3, HA4, respectively.

Each of the heating areas HA1, HA2, HA3, HA4 and each of the working coils WC1, WC2, WC3, WC4 may be disposed at a line along one direction (e.g., up and down directions). The second heating area HA2 may be disposed between the first heating area HA1 and the third heating area HA3. The third heating area HA3 may be disposed between the second heating area HA2 and the fourth heating area HA4. The second heating area HA2 and the third heating area HA3 may be disposed between the first heating area HA1 and the fourth heating area HA4. Although not shown, at least one sensing coil for container detection may be disposed at each of the heating areas HA1, HA2, HA3, HA4.

The first coil module 2003b may include four heating areas HA5, HA6, HA7, HA8 and four working coils WC5, WC6, WC7, WC8 disposed at positions corresponding to the heating areas HA5, HA6, HA7, HA8, respectively.

Each of the heating areas HA5, HA6, HA7, HA8 and each of the working coils WC5, WC6, WC7, WC8 may be disposed at a line along one direction (e.g., up and down directions). The sixth heating area HA6 may be disposed between the fifth heating area HA5 and the seventh heating area HA7. The seventh heating area HA7 may be disposed between the sixth heating area HA6 and the eighth heating area HA8. The sixth heating area HA6 and the seventh heating area HA7 may be disposed between the fifth heating area HA5 and the eighth heating area HA8. Although not shown, at least one sensing coil for container detection may be disposed at each of the heating areas HA5, HA6, HA7, HA8.

The first heating area HA1 may be disposed adjacent to the fifth heating area HA5. The second heating area HA2 may be disposed adjacent to the sixth heating area HA6. The third heating area HA3 may be disposed adjacent to the seventh heating area HA7. The fourth heating area HA4 may be disposed adjacent to the eighth heating area HA8.

The third coil module 2001a may include three heating areas HA9, HA10, HA11 and three working coils WC9, WC10, WC11 disposed at positions corresponding to the heating areas HA9, HA10, HA11, respectively.

Each of the heating areas HA9, HA10, HA11 and each of the working coils WC9, WC10, WC11 may be disposed at a line along one direction (e.g., up and down directions). The ninth heating area HA9 may be disposed between the tenth heating area HA10 and the eleventh heating area HA11. Although not shown, at least one sensing coil for container detection may be disposed at each of the heating areas HA9, HA10, HA11.

The fifth heating area HA5 may be disposed adjacent to the ninth heating area HA10. The sixth heating area HA6 may be disposed adjacent to the ninth heating area HA9. The seventh heating area HA7 may be disposed adjacent to the eleventh heating area HA11.

Referring to FIGS. 30 and 33, the first coil module 2003a and the second coil module 2003b included in the home appliance according to a fifth embodiment may be implemented in the same manner as the circuit diagram shown in FIG. 30. In other words, the home appliance according to a fifth embodiment may include a rectifier circuit Rc, a first DC link capacitor CD1, a first inverter INV1, a second DC link capacitor CD2, a second inverter INV2, a sensing coil SC, a controller 500, a driving circuit 300, eight working coils WC1, WC2, WC3, WC4, WC5, WC6, WC7, WC8 disposed at positions corresponding to eight heating areas HA1, HA2, HA3, HA4, HA5, HA6, HA7, HA8, a first relay R1, a second relay R2, a third relay R3, a fourth relay R4, a fifth relay R5, and a sixth relay R6.

Referring to FIGS. 33 and 34, the home appliance according to a fifth embodiment may further include a third DC link capacitor CD3, a third inverter INV3, three working coils WC9, WC10, WC11 disposed at positions corresponding to three heating areas HA9, HA10, HA11, a seventh relay R7, and an eighth relay R8.

The third DC link capacitor CD3 may smooth the voltage output from the rectifier circuit Rc, and output the smoothed voltage.

The third inverter INV3 may output an alternating current with the use of the voltage output from the third DC link capacitor CD3. In an embodiment, the third inverter INV3 may include a fifth switching element SW5 and a sixth switching element SW6. The fifth switching element SW5 and the sixth switching element SW6 may be turned on and turned off by a fifth switching signal S5 and a sixth switching signal S6 supplied by the driving circuit 300. The fifth switching element SW5 and the sixth switching element SW6 may be alternately turned on and turned off. In another embodiment, the third inverter INV3 may include two or more switching elements.

The controller 500 may supply a control signal to the driving circuit 300. When the control signal is supplied to the driving circuit 300, the driving circuit 300 may output the switching signal S5, S6. When the fifth switching signal S5 and the sixth switching signal S6 are supplied to the third inverter INV3, the fifth switching element SW5 and the sixth switching element SW6 may be alternately turned on and turned off. Thereby, from the third inverter INV3 an alternating current can be output. When the alternating current output from the third inverter INV3 is supplied to the working coil WC9, WC10, WC11, the container provided on the top of the working coil WC9, WC10, WC11 can be heated.

One end of the ninth working coil WC9 may be connected with the third inverter INV3. To the other end of the ninth working coil WC9, a ninth resonance capacitor C9 may be connected.

One end of the tenth working coil WC10 may be connected with the ninth working coil WC9 and the ninth resonance capacitor C9. To the other end of the tenth working coil WC10, a tenth resonance capacitor C10 may be connected. The seventh relay R7 may be connected between the ground terminal and a group consisting of the tenth working coil WC10 and the tenth resonance capacitor C10.

One end of the eleventh working coil WC11 may be connected with the ninth working coil WC9 and the ninth resonance capacitor C9. To the other end of the eleventh working coil WC11, an eleventh resonance capacitor C11 may be connected. The eighth relay R8 may be connected between the ground terminal and a group consisting of the eleventh working coil WC11 and the eleventh resonance capacitor C11.

The ninth working coil WC9 and the tenth working coil WC10 may be connected with each other in series. The ninth working coil WC9 and the eleventh working coil WC11 may be connected with each other in series. The tenth working coil WC10 and the eleventh working coil WC11 may be connected with each other in parallel.

The controller 500 may determine whether a container is present on each heating area HA1, HA2, HA3, HA4, HA5, HA6, HA7, HA8, HA9, HA10, HA11 by performing container detection on each heating area HA1, HA2, HA3, HA4, HA5, HA6, HA7, HA8, HA9, HA10, HA11 with the use of at least one sensing coil SC disposed at the coil module 2003a, 2003b, 2001a. The controller 500 may control the opening and closing states of the first relay R1, the second relay R2, the third relay R3, the fourth relay R4, the fifth relay R5, the sixth relay R6, the seventh relay R7, and the eighth relay R8 according to the result of the container detection.

When it is determined that the container is present in the first heating area HA1, the second heating area HA2, the fifth heating area HA5, and the sixth heating area HA6, the controller 500 may control the second relay R2 and the fifth relay R5 to be closed and the first relay R1, the third relay R3, the fourth relay R4, and the sixth relay R6 to be opened.

When it is determined that the container is present in the second heating area HA2, the third heating area HA3, the sixth heating area HA6, and the seventh heating area HA7, the controller 500 may control the first relay R1 and the fourth relay R4 to be closed and the second relay R2, the third relay R3, the fifth relay R5, and the sixth relay R6 to be opened.

When it is determined that the container is present in the third heating area HA3, the fourth heating area HA4, the seventh heating area HA7, and the eighth heating area HA8, the controller 500 may control the third relay R3 and the sixth relay R6 to be closed and the first relay R1, the second relay R2, the fourth relay R4, and the fifth relay R5 to be opened.

When it is determined that the container is present in the first heating area HA1, the second heating area HA2, the third heating area HA3, the fifth heating area HA5, the sixth heating area HA6, and the seventh heating area HA7, the controller 500 may control the first relay R1, the second relay R2, the fourth relay R4, and the fifth relay R5 to be closed and the third relay R3 and the sixth relay R6 to be opened.

When it is determined that the container is present in the second heating area HA2, the third heating area HA3, the fourth heating area HA4, the sixth heating area HA6, the seventh heating area HA7, and the eighth heating area HA8, the controller 500 may control the first relay R1, the third relay R3, the fourth relay R4, and the sixth relay R6 to be closed and the second relay R2 and the fifth relay R5 to be opened.

When it is determined that the container is present in the first heating area HA1, the second heating area HA2, the third heating area HA3, the fourth heating area HA4, the fifth heating area HA5, the sixth heating area HA6, the seventh heating area HA7, and the eighth heating area HA8, the controller 500 may control the second relay R2, the third relay R3, the fifth relay R5, and the sixth relay R6 to be closed and the first relay R1 and the fourth relay R4 to be opened.

When it is determined that the container is present in the ninth heating area HA9 or the tenth heating area HA10, the controller 500 may control the seventh relay R7 to be closed and the eighth relay R8 to be opened.

When it is determined that the container is present in the ninth heating area HA9 and the tenth heating area HA10, the controller 500 may control the seventh relay R7 to be closed and the eighth relay R8 to be opened.

When it is determined that the container is present in the ninth heating area HA9 or the eleventh heating area HA11, the controller 500 may control the eighth relay R8 to be closed and the seventh relay R7 to be opened.

When it is determined that the container is present in the ninth heating area HA9 and the eleventh heating area HA11, the controller 500 may control the eighth relay R8 to be closed and the seventh relay R7 to be opened.

When it is determined that the container is present in the ninth heating area HA9, the tenth heating area HA10, and the eleventh heating area HA11, the controller 500 may control the seventh relay R7 and the eighth relay R8 to be closed.

When it is determined that the container is present in the fifth heating area HA5, the sixth heating area HA6, the ninth heating area HA9, and the tenth heating area HA10, the controller 500 may control the fifth relay R5 and the seventh relay R7 to be closed and the first relay R1, the second relay R2, the third relay R3, the fourth relay R4, the sixth relay R6, and the eighth relay R8 to be opened.

When it is determined that the container is present in the sixth heating area HA6, the seventh heating area HA7, the ninth heating area HA9, and the eleventh heating area HA11, the controller 500 may control the fourth relay R4 and the eighth relay R8 to be closed and e first relay R1, the second relay R2, the third relay R3, the fifth relay R5, the sixth relay R6, and the seventh relay R7 to be opened.

When it is determined that the container is present in the fifth heating area HA5, the sixth heating area HA6, the seventh heating area HA7, the ninth heating area HA9, the tenth heating area HA10, and the eleventh heating area HA11, the controller 500 may control the fourth relay R4, the fifth relay R5, the seventh relay R7, and the eighth relay R8 to be closed and the first relay R1, the second relay R2, the third relay R3, and the sixth relay R6 to be opened.

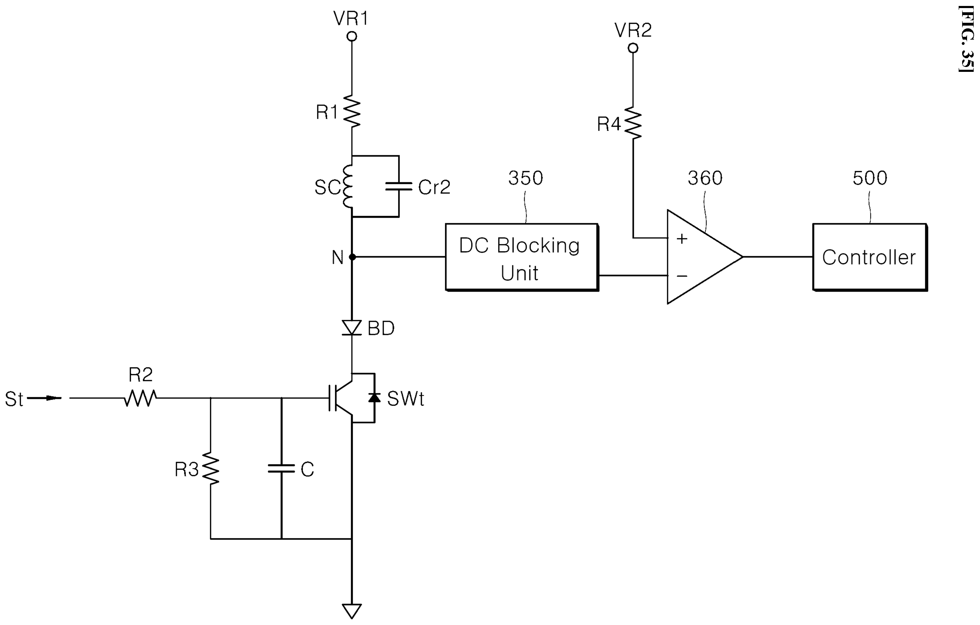

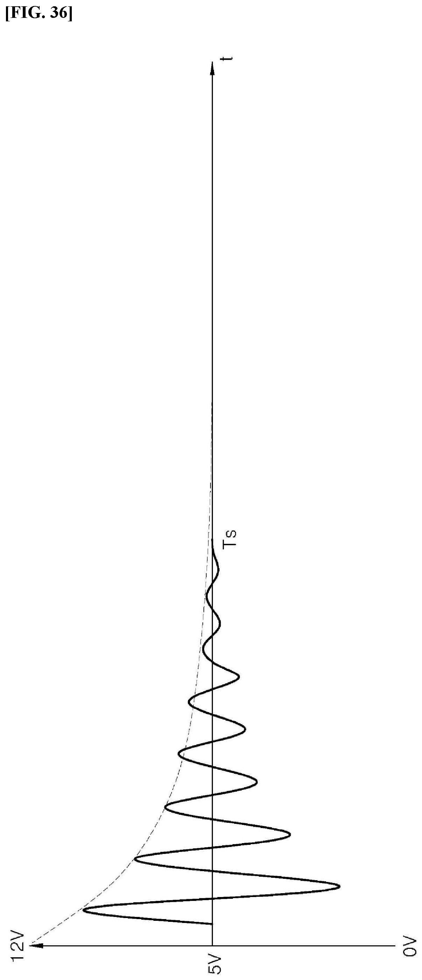

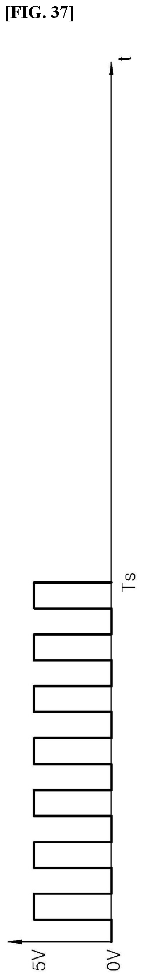

FIG. 35 is a circuit diagram of a sensing circuit according to an embodiment. FIG. 36 is a diagram illustrating a waveform of a resonance signal output from an output node of a sensing circuit according to an embodiment. FIG. 37 is a diagram illustrating a waveform of a square wave output from a comparator of a sensing circuit according to an embodiment.

In an embodiment, the controller 500 may perform container detection with the use of the sensing circuit shown in FIG. 35.

Referring to FIG. 35, a sensing circuit according to an embodiment may include a sensing coil SC, a resonance capacitor Cr2 connected in parallel with the sensing coil SC, a switching element SWt connected with the sensing coil SC and the resonance capacitor Cr2, and a comparator 360 comparing a resonance signal output from the output node N with a predetermined reference signal and outputting a square wave.

When the container detection starts, the controller 500 may turn on the switching element SWt for a predetermined charging time. Thereby, the first power voltage VR1 and the ground terminal can be electrically connected with each other, so that a voltage can be applied to the sensing coil SC and the resonance capacitor Cr2.

When the predetermined charging time has elapsed, the controller 500 may turn off the switching element SWt. Thereby, a resonance phenomenon can occur by the sensing coil SC and the resonance capacitor Cr2.

When the resonance phenomenon occurs by the sensing coil SC and the resonance capacitor Cr2, a resonance signal may be output through the output node N. FIG. 36 is a diagram illustrating a waveform of a resonance signal output from an output node of a sensing circuit according to an embodiment.

In an embodiment, the sensing circuit may further include a DC blocking unit 350 for removing a DC component from the resonance signal output from the output node N. In another embodiment, the DC blocking unit 350 may be omitted.

The resonance signal output from the output node N may be input to the comparator 360. The comparator 360 may output a square wave by comparing the resonance signal with a reference signal defined by a second power voltage VR2. FIG. 37 is a diagram illustrating a waveform of a square wave output from a comparator of a sensing circuit according to an embodiment.

More specifically, the comparator 360 may compare the voltage magnitude of the reference signal generated by the second power voltage VR2 with the voltage magnitude of the resonance signal output from the output node N, and may output a square wave according to the comparison result. For example, if the voltage magnitude of the resonance signal output from the output node N is greater than or equal to the voltage magnitude of the reference signal, the comparator 360 may output a signal having a voltage magnitude of the first level (e.g., 5V), and if the voltage magnitude of the resonance signal is less than the voltage magnitude of the reference signal, the comparator 360 may output a signal having a voltage magnitude of the second level (e.g., 0V).

The controller 500 may count the number of waveforms in the square wave output from the comparator 360, and determine whether a container is present on the top of the sensing coil SC based on the counted number of waveforms in the square wave.

When a container is present on the top of the sensing coil SC, the impedance of the sensing coil SC and the resonance capacitor Cr2 is maintained relatively high compared to when a container is not present. Therefore, the resonance signal can be attenuated and then dissipated over a relatively short period of time. Conversely, when there is no container on the top of the sensing coil SC, the impedances of the sensing coil SC and the resonance capacitor Cr2 are maintained relatively low compared to when a container is present. Therefore, the resonance signal can be attenuated and then dissipated over a relatively long period of time.

As a result, the number of waveforms in the square wave output by the comparator 360 when there is no container on the top of the sensing coil SC is greater than the number of waveforms in the square wave output by the comparator 360 when there is a container on the top of the sensing coil SC.

Therefore, the controller 500 can determine that a container is present on the top of the sensing coil SC if the counted number of waveforms in the square wave is less than or equal to a predetermined reference value. Conversely, the controller 500 can determine that there is no container on the top of the sensing coil SC if the counted number of waveforms in the square wave exceeds a predetermined reference value. The reference value is a value that may be set differently according to an embodiment.

In an embodiment, the controller 500 may sequentially perform the container detection on each sensing coil SC. Therefore, while the container detection is performed for one sensing coil SC, the remaining sensing coils SC may be maintained in a discharged state.

The embodiments described with reference to the drawings so far are merely exemplary, and a person having ordinary skill in the art to which the relevant technology belongs will understand that implementations of various modifications or other equivalent embodiments are possible from these embodiments. Additionally, even if effects of configurations have not been explicitly described when describing the embodiments, other predictable effects by the corresponding configuration should also be recognized.

**Claims**

1. A home appliance comprising:

   a rectifier circuit rectifying an input voltage and outputting a rectified voltage;
   a DC link capacitor smoothing the voltage output from the rectifier circuit;
   an inverter outputting an alternating current using a voltage smoothed by the DC link capacitor;
   a first working coil connected with the inverter and disposed at a position corresponding to a first heating area;
   a second working coil connected in series with the first working coil and disposed at a position corresponding to a second heating area;
   a third working coil connected in series with the first working coil, connected in parallel with the second working coil, and disposed at a position corresponding to a third heating area;
   a first relay connected between the second working coil and a ground terminal;
   a second relay connected between the third working coil and a ground terminal; and
   a controller configured to perform container detection on the first heating area, the second heating area, and the third heating area, and control opening and closing states of the first relay and the second relay according to a result of the container detection.

2. The home appliance of claim 1, wherein when the controller determines that a container is present in the first heating area and the second heating area, the controller is configured to control the first relay to be closed and the second relay to be opened.

3. The home appliance of claim 1, wherein when the controller determines that a container is present in the first heating area and the third heating area, the controller is configured to control the second relay to be closed and the first relay to be opened.

4. The home appliance of claim 1, wherein when the controller determines that a container is present in the first heating area, the second heating area, and the third heating area, the controller is configured to control the first relay and the second relay to be closed.

5. The home appliance of claim 1, wherein the first heating area is disposed between the second heating area and the third heating area.

6. A home appliance comprising:

   a rectifier circuit rectifying an input voltage and outputting a rectified voltage;
   a first DC link capacitor smoothing the voltage output from the rectifier circuit;
   a first inverter outputting an alternating current using a voltage smoothed by the first DC link capacitor;
   a second DC link capacitor smoothing the voltage output from the rectifier circuit;
   a second inverter outputting an alternating current using a voltage smoothed by the second DC link capacitor;
   a second working coil connected with the first inverter and disposed at a position corresponding to a second heating area;
   a first working coil connected in series with the second working coil and disposed at a position corresponding to a first heating area;
   a third working coil connected with the second inverter and disposed at a position corresponding to a third heating area;
   a fourth working coil connected in series with the third working coil and disposed at a position corresponding to a fourth heating area;
   a first relay connected between a connection node of the first working coil and the second working coil and a connection node of the third working coil and the fourth working coil;
a second relay connected between the first working coil and a ground terminal;
a third relay connected between the fourth working coil and a ground terminal;
a controller configured to perform container detection on the first heating area, the second heating area, the third heating area, and the fourth heating area, and control opening and closing states of the first relay, the second relay, and the third relay according to a result of the container detection.

7. The home appliance of claim 6, wherein when the controller determines that a container is present in the first heating area and the second heating area, the controller is configured to control the second relay to be closed and the first relay and the third relay to be opened.

8. The home appliance of claim 6, wherein when the controller determines that a container is present in the second heating area and the third heating area, the controller is configured to control the first relay to be closed and the second relay and the third relay to be opened.

9. The home appliance of claim 6, wherein when the controller determines that a container is present in the third heating area and the fourth heating area, the controller is configured to control the third relay to be closed and the first relay and the second relay to be opened.

10. The home appliance of claim 6, wherein when the controller determines that a container is present in the first heating area, the second heating area, and the third heating area, the controller is configured to control the first relay and the second relay to be closed and the third relay to be opened.

11. The home appliance of claim 6, wherein when the controller determines that a container is present in the second heating area, the third heating area, and the fourth heating area, the controller is configured to control the first relay and the third relay to be closed and the second relay to be opened.

12. The home appliance of claim 6, wherein when the controller determines that a container is present in the first heating area, the second heating area, third heating area, and the fourth heating area, the controller is configured to control the second relay and the third relay to be closed and the first relay to be opened.

13. The home appliance of claim 6, wherein the second heating area is disposed between the first heating area and the third heating area, and
wherein the third heating area is disposed between the second heating area and the fourth heating area.

14. The home appliance of claim 6, wherein the second heating area and the third heating area are disposed between the first heating area and the fourth heating area.

15. The home appliance of claim 6, further comprising:

a sixth working coil connected with the first inverter and disposed at a position corresponding to a sixth heating area;
a fifth working coil connected in series with the sixth working coil and disposed at a position corresponding to a fifth heating area;
a seventh working coil connected with the second inverter and disposed at a position corresponding to a seventh heating area;
an eighth working coil connected in series with the seventh working coil and disposed at a position corresponding to an eighth heating area;
a fourth relay connected between a connection node of the fifth working coil and the sixth working coil and a connection node of the seventh working coil and the eighth working coil;
a fifth relay connected between the fifth working coil and a ground terminal; and
a sixth relay connected between the eighth working coil and a ground terminal,
wherein the controller is configured to perform container detection on the first heating area, the second heating area, the third heating area, the fourth heating area, the fifth heating area, the sixth heating area, the seventh heating area, and the eighth heating area, and control opening and closing states of the first relay, the second relay, the third relay, the fourth relay, the fifth relay, and the sixth relay according to a result of the container detection.

16. The home appliance of claim 15, wherein when the controller determines that a container is present in the first heating area, the second heating area, the fifth heating area, and the sixth heating area, the controller is configured to control the second relay and the fifth relay to be closed and the first relay, the third relay, the fourth relay, and the sixth relay to be opened.

17. The home appliance of claim 15, wherein when the controller determines that a container is present in the second heating area, the third heating area, the sixth heating area, and the seventh heating area, the controller is configured to control the first relay and the fourth relay to be closed and the second relay, the third relay, the fifth relay, and the sixth relay to be opened.

18. The home appliance of claim 15, wherein when the controller determines that a container is present in the third heating area, the fourth heating area, the seventh heating area, and the eighth heating area, the controller is configured to control the third relay and the sixth relay to be closed and the first relay, the second relay, the fourth relay, and the fifth relay to be opened.

19. The home appliance of claim 15, wherein when the controller determines that a container is present in the first heating area, the second heating area, the third heating area, the fifth heating area, the sixth heating area, and the seventh heating area, the controller is configured to control the first relay, the second relay, the fourth relay, and the fifth relay to be closed and the third relay and the sixth relay to be opened.

20. The home appliance of claim 15, wherein when the controller determines that a container is present in the second heating area, the third heating area, the fourth area, the sixth heating area, the seventh heating area, and the eighth heating area, the controller is configured to control the first relay, the third relay, the fourth relay, and the sixth relay to be closed and the second relay and the fifth relay to be opened.

21. The home appliance of claim 15, wherein when the controller determines that a container is present in the first heating area, the second heating area, the third heating area, the fourth area, the fifth heating area, the sixth heating area, the seventh heating area, and the eighth heating area, the controller is configured to control the second relay, the third relay, the fifth relay, and the sixth relay to be closed and the first relay and the fourth relay to be opened.

22. The home appliance of claim 15, wherein the sixth heating area is disposed between the fifth heating area and the seventh heating area, and wherein the seventh heating area is disposed between the sixth heating area and the eighth heating area.

23. The home appliance of claim 15, wherein the sixth heating area and the seventh heating area are disposed between the fifth heating area and the eighth heating area.

24. The home appliance of claim 15, wherein:

the first heating area is disposed to be adjacent to the fifth heating area;
the second heating area is disposed to be adjacent to the sixth heating area;

the third heating area is disposed to be adjacent to the seventh heating area; and
the fourth heating area is disposed to be adjacent to the eighth heating area.

25. The home appliance of claim 15, further comprising:

a third DC link capacitor smoothing the voltage output from the rectifier circuit;
a third inverter outputting an alternating current using a voltage smoothed by the third DC link capacitor;
a ninth working coil connected with the third inverter and disposed at a position corresponding to a ninth heating area;
a tenth working coil connected in series with the ninth working coil and disposed at a position corresponding to a tenth heating area;
an eleventh working coil connected in series with the ninth working coil, connected in parallel with the tenth working coil, and disposed at a position corresponding to an eleventh heating area;
a seventh relay connected between the tenth working coil and a ground terminal; and
an eighth relay connected between the eleventh working coil and a ground terminal,
wherein the controller is configured to perform container detection on the first heating area, the second heating area, the third heating area, the fourth heating area, the fifth heating area, the sixth heating area, the seventh heating area, the eighth heating area, the ninth heating area, the tenth heating area, and the eleventh heating area, and control opening and closing states of the first relay, the second relay, the third relay, the fourth relay, the fifth relay, the sixth relay, the seventh relay, and the eighth relay according to a result of the container detection.

26. The home appliance of claim 25, wherein when the controller determines that a container is present in the fifth heating area, the sixth heating area, the ninth heating area, and the tenth heating area, the controller is configured to control the fifth relay and the seventh relay to be closed and the first relay, the second relay, the third relay, the fourth relay, the sixth relay, and the eighth relay to be opened.

27. The home appliance of claim 25, wherein when the controller determines that a container is present in the sixth heating area, the seventh heating area, the ninth heating area, and the eleventh heating area, the controller is configured to control the fourth relay and the eighth relay to be closed and the first relay, the second relay, the third relay, the fifth relay, the sixth relay, and the seventh relay to be opened.

**28.** The home appliance of claim 25, wherein when the controller determines that a container is present in the fifth heating area, the sixth heating area, the seventh heating area, the ninth heating area, the tenth heating area, and the eleventh heating area, the controller is configured to control the fourth relay, the fifth relay, seventh relay, and the eighth relay to be closed and the first relay, the second relay, the third relay, and the sixth relay to be opened.

**29.** The home appliance of claim 25, wherein the ninth heating area is disposed between the tenth heating area and the eleventh heating area.

**30.** The home appliance of claim 25, wherein:

the sixth heating area is disposed to be adjacent to the ninth heating area;
the fifth heating area is disposed to be adjacent to the tenth heating area; and
the seventh heating area is disposed to be adjacent to the eleventh heating area.

[FIG. 1]

[FIG. 2]

[FIG. 3]

[FIG. 4]

[FIG. 5]

[FIG. 6]

[FIG. 7]

1001

1030    1010

1350    1220
1400
1200    1220
         1210
1400    1120

1100    1120
         1110
1400    1120

1100    1120
         1110
1400    1120

1100    1120
         1110
1400    1120

1300
1120

Va
Vb  } V
Vc

[FIG. 8]

[FIG. 9]

[FIG. 10]

[FIG. 11]

EP 4 783 738 A1

[FIG. 12]

48

[FIG. 13]

[FIG. 14]

[FIG. 15]

[FIG. 16]

[FIG. 17]

[FIG. 18]

[FIG. 19]

[FIG. 20]

**[FIG. 21]**

[FIG. 22]

[FIG. 23]

[FIG. 24]

[FIG. 25]

[FIG. 26]

[FIG. 27]

2003

WC1

HA1

WC2

HA2

WC3

HA3

WC4

HA4

[FIG. 28]

[FIG. 29]

2003a          2003b

WC1

HA1

HA5

WC5

WC2

HA2

HA6

WC6

WC3

HA3

HA7

WC7

WC4

HA4

HA8

WC8

[FIG. 30]

[FIG. 31]

[FIG. 32]

[FIG. 33]

[FIG. 34]

[FIG. 35]

**[FIG. 36]**

[FIG. 37]

## INTERNATIONAL SEARCH REPORT

| International application No. |
|---|
| **PCT/KR2024/014230** |

| A. | CLASSIFICATION OF SUBJECT MATTER |
|---|---|

**H05B 6/12**(2006.01)i; **H05B 6/06**(2006.01)i; **F24C 15/34**(2006.01)i; **F24C 15/10**(2006.01)i; **F24C 3/12**(2006.01)i; **H02M 1/10**(2006.01)i

According to International Patent Classification (IPC) or to both national classification and IPC

| B. | FIELDS SEARCHED |
|---|---|

Minimum documentation searched (classification system followed by classification symbols)

H05B 6/12(2006.01); H05B 1/02(2006.01); H05B 6/06(2006.01); H05B 6/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: cooker, induction, heating coil, rectifier, direct current, capacitor, inverter, relay, sense, container

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2007-0114488 A (LG ELECTRONICS INC.) 04 December 2007 (2007-12-04)<br>See paragraphs [0031]-[0032]; and figure 3. | 1-30 |
| Y | JP 2010-040360 A (MITSUBISHI ELECTRIC CORP.) 18 February 2010 (2010-02-18)<br>See paragraph [0008]; and figure 1. | 1-30 |
| Y | EP 3678454 A1 (GUANGDONG MIDEA KITCHEN APPLIANCES MANUFACTURING CO., LTD. et al.) 08 July 2020 (2020-07-08)<br>See paragraphs [0013]-[0020]; and figures 1-5. | 6-30 |
| A | KR 10-1743495 B1 (LG ELECTRONICS INC.) 05 June 2017 (2017-06-05)<br>See paragraphs [0018]-[0112]; and figures 1-10. | 1-30 |
| A | KR 10-2017-0123819 A (CUCHEN CO., LTD.) 09 November 2017 (2017-11-09)<br>See paragraphs [0015]-[0048]; and figures 1-5. | 1-30 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2025** | **17 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014230**

| Patent document cited in search report | | | Publication date (day/month/year) | Patent family member(s) | | | Publication date (day/month/year) |
|---|---|---|---|---|---|---|---|
| KR | 10-2007-0114488 | A | 04 December 2007 | None | | | |
| JP | 2010-040360 | A | 18 February 2010 | JP | 4818330 | B2 | 16 November 2011 |
| EP | 3678454 | A1 | 08 July 2020 | CN | 108156684 | A | 12 June 2018 |
| | | | | CN | 108156684 | B | 05 July 2019 |
| | | | | EP | 3678454 | A4 | 18 November 2020 |
| | | | | WO | 2019-109586 | A1 | 13 June 2019 |
| KR | 10-1743495 | B1 | 05 June 2017 | KR | 10-2011-0092070 | A | 17 August 2011 |
| KR | 10-2017-0123819 | A | 09 November 2017 | KR | 10-1833924 | B1 | 05 March 2018 |

Form PCT/ISA/210 (patent family annex) (July 2022)